(19) Europäisches Patentamt
European Patent Office
Office européen des brevets

(11) **EP 4 176 217 B1**

(12) **EUROPÄISCHE PATENTSCHRIFT**

(45) Veröffentlichungstag und Bekanntmachung des Hinweises auf die Patenterteilung:
**22.10.2025   Patentblatt 2025/43**

(21) Anmeldenummer: **22729168.9**

(22) Anmeldetag: **13.05.2022**

(51) Internationale Patentklassifikation (IPC):
***F25J 1/00*** *(2006.01)*

(52) Gemeinsame Patentklassifikation (CPC):
**F25J 1/0007; C01B 23/0052; F25B 9/002; F25B 9/10; F25J 1/0225; F25J 1/0258; F25J 1/0276;** C01B 2210/0031; F25J 2205/60; F25J 2220/02; F25J 2245/90; F25J 2270/908; F25J 2290/60; F25J 2290/62

(86) Internationale Anmeldenummer:
**PCT/EP2022/063072**

(87) Internationale Veröffentlichungsnummer:
**WO 2022/248255 (01.12.2022 Gazette 2022/48)**

(54) **VORRICHTUNG ZUR REINIGUNG UND VERFLÜSSIGUNG VON HELIUM UND ZUGEHÖRIGES VERFAHREN**

DEVICE FOR PURIFYING AND LIQUEFYING HELIUM AND ASSOCIATED METHOD

DISPOSITIF DE PURIFICATION ET DE LIQUÉFACTION D'HÉLIUM ET PROCÉDÉ ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2021   DE 102021205423**

(43) Veröffentlichungstag der Anmeldung:
**10.05.2023   Patentblatt 2023/19**

(73) Patentinhaber: **Bruker Switzerland AG 8117 Fällanden (CH)**

(72) Erfinder: **WIKUS, Patrick 8309 Nürensdorf (CH)**

(74) Vertreter: **Kohler Schmid Möbus Patentanwälte Partnerschaftsgesellschaft mbB Gropiusplatz 10 70563 Stuttgart (DE)**

(56) Entgegenhaltungen:
WO-A2-2009/086430     JP-A- 2008 014 878
JP-A- H11 118 349

- CHOUDHURY ANUP ET AL: "Experimental helium liquefier with a GM cryocooler", REVIEW OF SCIENTIFIC INSTRUMENTS, AMERICAN INSTITUTE OF PHYSICS, 2 HUNTINGTON QUADRANGLE, MELVILLE, NY 11747, vol. 88, no. 6, 29 June 2017 (2017-06-29), XP012221971, ISSN: 0034-6748, [retrieved on 20170629], DOI: 10.1063/1.4989696
- ERIC ARNAUD FAUVE ET AL: "Ras Laffan helium recovery unit 2", AIP CONFERENCE PROCEEDINGS, 1 January 2012 (2012-01-01), NEW YORK, US, pages 102 - 109, XP055464467, ISSN: 0094-243X, DOI: 10.1063/1.4706910

**Beschreibung**

Die Erfindung betrifft eine Vorrichtung zur Reinigung und Verflüssigung von Helium, umfassend

- einen Kaltkopf, mit

  einem raumtemperaturwarmen, hinteren Endabschnitt,
  und zumindest einer hintersten, im Betrieb wärmsten Kühlstufe und einer vordersten, im Betrieb kältesten Kühlstufe,
  wobei der raumtemperaturwarme Endabschnitt und die Kühlstufen entlang einer Erstreckungsrichtung des Kaltkopfs aufeinander folgend angeordnet sind,

- ein Adsorberbett, das thermisch an den Kaltkopf gekoppelt ist,
- und ein vakuumisoliertes Speichergefäß für verflüssigtes Helium,

  wobei durch die Vorrichtung ein Gasraum eingerichtet ist, in den der Kaltkopf mit seinen Kühlstufen hineinragt und der das Adsorberbett enthält,
  wobei der Gasraum von dem raumtemperaturwarmen Endabschnitt des Kaltkopfs, an welchem ein Einspeisungsanschluss für zu reinigendes Heliumgas ausgebildet ist, entlang des Kaltkopfs und über das Adsorberbett zur kältesten Kühlstufe des Kaltkopfs führt,
  und wobei eine thermische Kopplung des Kaltkopfs zum Adsorberbett von wenigstens zwei Auskopplungsorten am Kaltkopf zu wenigstens zwei Einkopplungsorten am Adsorberbett eingerichtet ist.

Eine solche Vorrichtung ist aus A. Choudhury und S. Sahu, "Experimental helium liquefier with a GM cryocooler", Review of Scientific Instrumenst 88, 065116 (2017) (= Referenz [D12]), bekannt geworden.

Flüssiges Helium findet in den Bereichen Anwendung, in denen Kühlmittel mit besonders tiefen Temperaturen gebraucht werden. Unter normalen Druckbedingungen liegt Helium bei 4,2 K in flüssiger Form vor. Beispielsweise kann Helium als Kühlmittel beim Einsatz supraleitender Magneten verwendet werden, um den Supraleiter unterhalb seiner Sprungtemperatur zu halten. In der Praxis werden solche supraleitenden Magneten zum Beispiel bei der Magnetresonanzspektroskopie (NMR), beim Betrieb von Teilchenbeschleunigern und bei der Kernspintomographie (MRT) im Bereich der medizinischen Diagnostik verwendet.

Helium ist weiterhin ein vielseitig verwendeter Rohstoff, der auch in gasförmiger Form genutzt wird. Dabei findet Helium beispielsweise Anwendung in der Lebensmittelindustrie, wo es als Treib- oder Packgas genutzt wird, in der Schweißtechnik, wo es als Inertgas eingesetzt wird, in Gasentladungsröhren oder als Traggas für Ballons und Luftschiffe, um nur einige Bereiche zu nennen. Für diese Vielzahl von Anwendungsbeispielen bedarf es jedoch einer ausreichend guten Versorgung mit Helium.

Helium liegt anteilig in einigen Erdgasquellen vor. Dieses Gasgemisch wird gefördert und das Helium abgetrennt. Zwar wurden in den letzten zwei Dekaden immer wieder neue heliumhaltige Erdgasquellen erschlossen. Der Verbrauch von Helium ist jedoch groß und steigt ständig. Dies schlägt sich dann in steigenden Preisen nieder. Außerdem ist Helium eine nicht-erneuerbare Ressource, weshalb es geboten scheint, den Verbrauch von frisch gefördertem Helium zu reduzieren, indem bereits gefördertes Helium zurückgewonnen wird.

Solch eine Rückgewinnung geschieht beispielsweise oft in NMR-Laboratorien, in denen das aus dem supraleitenden Magneten abgedampfte Helium wieder aufgefangen und für eine weitere Verwendung verflüssigt wird. Viele NMR-Laboratorien haben einen täglichen Verbrauch an flüssigem Helium von weniger als 50 Litern. In solchen Fällen erfolgt die Verflüssigung des Heliums oft mit Hilfe von Verflüssigern auf Basis von Kryokühlern (etwa Pulsrohrkühlern oder GM-Kühlern). Solche Verflüssiger reagieren besonders empfindlich auf die Reinheit des Heliumgases, welches ihnen zugeführt wird.

Es gibt dabei mehrere Ursachen, wie Verunreinigungen in den Heliumkreislauf eines Heliumrückgewinnungssystems gelangen können. Beispielsweise gelangt jedes Mal, wenn eine Leitung des Heliumrückgewinnungssystems geöffnet wird, etwas Luft in den Heliumkreislauf. Häufig verfügen Heliumrückgewinnungssysteme über Ballonspeicher, deren Haut zumindest teilweise für Luft und Feuchtigkeit durchlässig ist, wodurch diese unerwünschten Bestandteile dem Heliumkreislauf zugeführt werden. Weiterhin sind in die Heliumrückgewinnungssysteme oft Pumpen und Kompressoren integriert, bei denen im Betrieb Ölnebel und Crackingprodukte des Pumpenöls in den Heliumkreislauf gelangen.

Solcherlei Verunreinigungen frieren im Verflüssiger an den kalten Flächen eines sogenannten Kaltkopfes aus. Als Folge bildet sich nach und nach eine Schicht gefrorener Verunreinigungen aus, die den Kaltkopf zunehmend isoliert. Mit der Zeit ist der Kaltkopf thermisch so isoliert, dass keine ausreichend kalten Oberflächen mehr zur Verfügung stehen und das Helium nicht mehr - oder nicht mehr mit der gewünschten Rate - verflüssigt werden kann. Wenn der Verflüssiger über Rohrleitungen oder Blenden mit kleinem Querschnitt verfügt, besteht zusätzlich die Gefahr, dass diese von den gefrorenen Verunreinigungen verstopft werden. Um die Verunreinigungen zu entfernen, muss der Verflüssiger auf Raumtemperatur aufgewärmt werden, was ein teurer und zeitraubender Prozess ist.

Um eine ausreichende Reinheit des Heliumgases sicherzustellen, wird dem Verflüssiger üblicherweise ein sogenannter kryogener Purifier vorgeschaltet. Dazu wird das zu reinigende Heliumgas in diesem Purifier meist auf eine Temperatur zwischen 40 und 100 K abgekühlt und durch ein Adsorberbett (beispielsweise eine Schüttung aus Aktivkohle) geleitet. Im Adsorberbett frieren dann auf der großen Oberfläche, die durch die Aktivkohle zur Verfügung gestellt wird, die Verunreinigungen aus. Um eine gute Reinigungswirkung zu erzielen, muss der kryogene Purifier regelmäßig regeneriert werden. Hierzu wird das Adsorberbett auf Raumtemperatur aufgewärmt, damit die adsorbierten Verunreinigungen desorbieren und anschließend abgepumpt werden können. Die Kühlung dieser kryogenen Purifier erfolgt entweder über flüssigen Stickstoff, was den Nachteil mit sich bringt, dass dieser mit der Zeit verdampft und regelmäßig nachgefüllt werden muss, oder über einen separaten Kryokühler für den Purifier. Solche separaten kryogenen Purifier sind beispielsweise durch folgende Internetveröffentlichungen bekannt geworden:

- "AUTOMATIC HELIUM PURIFIER" der Firma Cryomech Inc, Syracuse (New York, USA), vgl. https://www.cryomech.com/articles/automatic-helium-purifier/ vom 14.04.2021 (= Referenz [D8]);
- "Helium gas purifier" der Firma Quantum Design GmbH, Darmstadt (Hessen, DE), vgl. https://qd-europe.com/ch/en/product/helium-gas-purifier/ vom 14.04.2021 (= Referenz [D9]);
- "Cryogenic Purificiation" der Firma Quantum Technology Corp, Sqamish (British Columbia, CA), vgl. https://quantum-technology.com/purify/cryogenic-purification.html vom 14.04.2021 (= Referenz [D10]);
- "KDHPS-CC Helium Purifier" der Firma CSIC Pride (Nanjing) Cryogenic Technology Co., Ltd., Nanjing (Jiangsu, CN), vgl. https://www.724pridecryogenics.com/en/prodetail.asp?id=701 vom 15.04.2021 (= Referenz [D11]);

Der separate Purifier trägt erheblich zum Gesamtenergieverbrauch der Heliumrückgewinnungsanlage bei und bringt zusätzliche Wartungskosten mit sich, da der Purifier mit einem eigenen Kaltkopf und einem eigenen Kompressor betrieben wird. Der separate Purifier erhöht zudem die technische Komplexität der Anlage, da ein zweiter Kompressor, ein weiterer Stromanaschluss, zusätzlicher Platz für die Aufstellung und möglicherweise ein zusätzlicher Anschluss für die Wasserkühlung benötigt wird, um nur einige Beispiele zu nennen.

Weiterhin wird das Helium, welches das Adsorberbett des Purifiers passiert hat, auf Raumtemperatur aufgewärmt, bevor es zum Verflüssiger geleitet wird, um dort dann wieder abgekühlt zu werden. Dies ist thermodynamisch ineffizient.

In der JP 4 570 546 B2 (= Referenz [D2]) wird ein Verflüssiger beschrieben, der zwei Kaltköpfe mit jeweils zwei oder mehreren Kühlstufen umfasst, welcher Helium abkühlt und anschließend verflüssigt. Auf eine vorherige Reinigung des Heliumgases wird nicht eingegangen.

Die WO 2016/005463 A1 (= Referenz [D3]) beschreibt eine Vorrichtung, in der Kaltfallen zur Reinigung eines Gasstroms eingesetzt werden können. Es werden Gegenstromwärmer eingesetzt, um thermodynamisch effizienter zu sein. Gekühlt wird in der Vorrichtung nur bei den zwei Temperaturniveaus, die an den beiden Stufen des Kaltkopfes verfügbar sind.

In der EP 2 567 159 B1 (= Referenz [D4]) wird ein Verflüssiger beschrieben, der Helium mit einem Kryokühler verflüssigt. Um die Effizienz der Verflüssigung zu steigern, wird der Druck im System erhöht, wodurch sich das gasförmige Helium bereits bei höheren Temperaturen verflüssigen lässt. Um die Verunreinigung, die sich am Kaltkopf absetzen, zu entfernen, wird der Kaltkopf in regelmäßigen Abständen erwärmt, damit sich die Verunreinigungen lösen. Die Verunreinigungen fallen allerdings ins Speichervolumen mit dem flüssigen Helium aus, wodurch die Verunreinigungen nicht aus dem Heliumsystem entfernt werden. Durch die Erwärmung des Kaltkopfes erhöht sich zudem die Wärmelast auf das Heliumbad.

Die KR 10 2142312 B1 (= Referenz [D5]) beschreibt einen Verflüssiger für Helium, der mit einem Purifier verbunden ist.

In der CN 107677045 A (= Referenz [D6]) wird eine Vorrichtung zur Reinigung von Helium beschrieben. Die Reinigung erfolgt über einen Wärmetauscher und einen Phasenseparator.

Aus Wang, "Intermediate cooling from pulse tube and regenerator in a 4K pulse tube cryocooler", Cryogenics 48(3): 154-159 (= Referenz [D7]) ist bekannt geworden, Wärmetauscher thermisch an ein Pulsrohr eines Kaltkopfs und einen Regenerator zu koppeln, da dort Kühlleistung abgegriffen werden kann, ohne die Kühlleistung der kältesten Kühlstufe signifikant zu verschlechtern.

Die eingangs erwähnte JP H11-118349 A (= Referenz [D1]) beschreibt eine Vorrichtung, mit der Heliumgas gereinigt und verflüssigt werden kann. Ein Purifier ist hierbei an die erste Stufe eines ersten Kaltkopfes über ein Wärmekontaktelement gekoppelt. Hierdurch wird der Purifier auf die Temperatur der ersten Stufe des ersten Kaltkopfes von ca. 60 K gekühlt und die Verunreinigungen aus dem durchgeleiteten Heliumgas können ausgefroren werden. Das gereinigte Heliumgas wird dann an den Kühlstufen des ersten und eines zweiten Kaltkopfs des Kryokühlers weitergeleitet, weiter gekühlt und zuletzt an der zweiten Kühlstufe des zweiten Kaltkopfs verflüssigt.

Nachteilig bei diesem Vorgehen ist es, dass die Verunreinigungen im Purifier bei sehr viel tieferen Temperaturen als für die meisten Verunreinigungen nötig ausgefroren werden. Dies ist thermodynamisch ineffizient. Zudem ist der Aufbau der Vorrichtung aufwändig.

Aus dem Artikel von A. Choudhury und S. Sahu (=Referenz [D12]), siehe oben, ist ein Heliumverflüssiger auf Basis eines Gifford-McMahon Kryokühlers bekannt geworden. Der Kryokühler verfügt über zwei Kühlstufen. Neu von außen zugeführtem Helium strömt am Kryokühler von oben nach unten entlang. Im Bereich der oberen, wärmeren Kühlstufe ist ein Adsorbermaterial angeordnet, das auf einer Temperatur von 40-50 K gehalten wird, und im Bereich der unteren, zweiten Kühlstufe findet die Heliumverflüssigung statt.

## Aufgabe der Erfindung

Es ist die Aufgabe der vorliegenden Erfindung, eine Vorrichtung zur Verfügung zu stellen, durch die Helium einfach und effizient gereinigt und verflüssigt werden kann.

## Beschreibung der Erfindung

Diese Aufgabe wird erfindungsgemäß gelöst durch eine Vorrichtung der eingangs genannten Art, die dadurch gekennzeichnet ist,

dass ein Auskopplungsbereich, über den sich die Auskopplungsorte am Kaltkopf verteilen, eine Länge in Erstreckungsrichtung des Kaltkopfs von wenigstens 5 cm aufweist,
wobei eine Auskopplungs-Temperaturdifferenz am Kaltkopf zwischen einem hintersten, dem raumtemperaturwarmen Ende des Kaltkopfs am nächsten liegenden Auskopplungsort und einem vordersten, der kältesten Kühlstufe am nächsten liegenden Auskopplungsort wenigstens 50 K beträgt,
und dass ein Einkopplungsbereich, über den sich die Einkopplungsorte am Adsorberbett verteilen, eine Länge in Erstreckungsrichtung des Kaltkopfs von wenigstens 5 cm aufweist,
wobei eine Einkopplungs-Temperaturdifferenz am Adsorberbett zwischen einem hintersten, dem raumtemperaturwarmen Ende des Kaltkopfs am nächsten liegenden Einkopplungsort und einem vordersten, der kältesten Kühlstufe am nächsten liegenden Einkopplungsort wenigstens 50 K beträgt.

Die vorliegende Erfindung schlägt vor, dass der Verflüssiger und das Adsorberbett in eine Einheit integriert und mit einem einzigen Kaltkopf betrieben werden. Das Adsorberbett und der Kaltkopf sind thermisch über mehrere Aus- und Einkopplungsorte, die entlang der Erstreckungsrichtung des Kaltkopfs verteilt sind, gekoppelt. Dabei können mehrere diskrete (voneinander getrennte) Aus- und Einkopplungsorte eingerichtet sein, oder eine Vielzahl von Aus- und Einkopplungsorten folgt unmittelbar aufeinander, so dass praktisch eine kontinuierliche thermische Kopplung eingerichtet ist. Hierdurch können im Adsorberbett unterschiedliche Temperaturen für die Adsorption von Verunreinigungen eingerichtet werden. Hierfür können diskrete (separate) Bereiche im Adsorberbett mit unterschiedlichen Temperaturen oder ein Temperaturgradient innerhalb des Adsorberbetts eingerichtet werden.
Die erfindungsgemäßen Temperaturdifferenzen (Auskopplungs-Temperaturdifferenz und Einkopplungs-Temperaturdifferenz jeweils wenigstens 50 K) lassen sich in der Praxis gut einrichten, und führen zu einer erheblichen Steigerung der thermodynamischen Effizienz, verglichen mit einer einheitlichen Adsorbertemperatur. Die verschiedenen Verunreinigungen können bei einer vergleichsweise hohen, und oft bei der höchstmöglichen Temperatur ausgefroren werden.
Am Einspeisungsanschluss wird zu verflüssigendes, möglicherweise verunreinigtes Heliumgas zugeleitet ("zu reinigendes Heliumgas"), um dieses mit dem Adsorberbett von den Verunreinigungen zu befreien. Wird das zu reinigende Heliumgas durch den eingerichteten Gasraum geleitet, können Verunreinigungen wie etwa Wasser, Kohlenwasserstoffe, Sauerstoff oder Stickstoff im Adsorberbett bei vergleichsweise hohen Temperaturen, und oft bei der höchstmöglichen Temperatur adsorbiert/ausgefroren werden. Insbesondere können verschiedene Arten von Verunreinigungen in unterschiedlichen Bereichen im Adsorberbett bei unterschiedlichen Temperaturen adsorbiert/ausgefroren werden. Thermodynamisch ist dies effizienter als ein Adsorbieren/Ausfrieren aller Verunreinigungen bei einer einzigen, einheitlichen Temperatur, die so tief gewählt werden muss, dass auch diejenigen Verunreinigungen, die bei den tiefsten Temperaturen adsorbiert/ausgefroren werden, mit erfasst werden können.
Die Adsorption von Verunreinigungen findet über einen gewissen Temperaturbereich statt. Dieser Temperaturbereich liegt oberhalb des Gefrierpunkts der jeweiligen Verunreinigung. Je tiefer die Temperatur, desto größer ist der Anteil der adsorbierten Verunreinigung im Vergleich zum Anteil der Verunreinigung im Heliumgas, wobei am Gefrierpunkt die Verunreinigung praktisch vollständig adsorbiert ist. Vereinfachend wird auch bei einer Adsorption oberhalb des Gefrierpunkts hier von "Ausfrieren" der Verunreinigung gesprochen. Der adsorbierte Anteil der Verunreinigung ist, neben der Temperatur, unter anderem abhängig von der Größe der Oberfläche des Adsorberbetts, weiterhin vom Material des Adsorberbetts und dem Partialdruck der jeweiligen Verunreinigung. Die Temperatur, bei der im Gleichgewicht 50% der jeweiligen Verunreinigung vom Adsorberbett gebunden ist und 50% in der Gasphase verbleibt, wird hier als Adsorptionstemperatur bezeichnet. Diese Adsorptionstemperatur wird im Folgenden dazu verwendet, die Temperatur bzw. einen diese Temperatur umgebenden Temperaturbereich, bei der die Adsorption der betreffenden Verunreinigung im Wesentlichen stattfindet, zu indizieren.
Im Rahmen der Erfindung kann die jeweilige Adsorptionswärme der verschiedenen Verunreinigungen bei einer vergleichsweise hohen, und oft bei der höchstmöglichen Temperatur aufgenommen werden, also für einen Großteil der Verunreinigungen bei einer höheren Temperatur als der tiefsten, im Adsorberbett bereitgestellten Temperatur. Die Bereitstellung von Kühlleistung bei dieser höheren Temperatur ist deutlich einfacher (effizienter) als die Bereitstellung von Kühlleistung bei der tiefsten, im Adsorberbett bereitgestellten Temperatur.

Die kälteste Kaltstufe des Kaltkopfs hat (im Betrieb) eine Temperatur $T_k$, die ausreicht, um durch den Gasraum strömendes, gasförmiges Helium zu verflüssigen; im Falle eines Heliumgasdrucks von ca. 1 bar hat die kälteste Kühlstufe typischerweise eine Temperatur $T_k$ von ca. 4,2 K. Beim Durchfließen des Gasraums wird das gasförmige Helium entlang der Erstreckungsrichtung des Kaltkopfs vom raumtemperaturwarmen Ende zur kältesten Kühlstufe hin allmählich abgekühlt. Hierdurch kann die thermodynamische Effizienz bei der Verflüssigung des Heliums verbessert werden.

Das Adsorberbett kann als einteiliger, durchgehender Adsorber im Gasraum ausgebildet sein, oder kann mehrere separate Adsorber im Gasraum umfassen. Unter dem Adsorberbett wird die Gesamtheit aller im Gasraum angeordneter Adsorber verstanden.

Reinigung und Verflüssigung des Heliumgases erfolgen in einem einheitlichen Gasraum, der um einen einzigen Kaltkopf eingerichtet ist. Ein weiterer Kaltkopf, der ausschließlich für die Kühlung des Adsorberbetts zuständig wäre, ist im Rahmen der Erfindung nicht erforderlich; zudem kann ein Transport des Heliumgases zwischen einem separaten Purifier und einem Verflüssiger, der in der Regel mit einer Erwärmung des Heliumgases einher geht und thermodynamisch ineffizient wäre, vermieden werden. Der Platzbedarf der erfindungsgemäßen Vorrichtung kann gering gehalten und die Reinigung und Verflüssigung von Heliumgas thermodynamisch besonders effizient gestaltet werden.

Der Kaltkopf stellt die aktive Kühlleistung bereit. Das Adsorberbett ist als passives Bauteil an den Kaltkopf thermisch gekoppelt. Eine thermische Kopplung zwischen einem Auskopplungsort am Kaltkopf und einem Einkopplungsort am Adsorberbett wird typischerweise eingerichtet durch einen direkten Festkörperkontakt oder durch Strahlung/Konvektion über einen (kleinen) Spalt, wobei der (kleine) Spalt bevorzugt eine Breite von maximal 1/3, besonders bevorzugt von maximal 1/5, ganz besonders bevorzugt von maximal 1/10 der Länge des Auskopplungsbereichs aufweist. Typischerweise ist die Breite des Spalts dann ≤ 5 mm, oft ≤ 3 mm. Die thermische Kopplung kann im Falle von Strahlung/Konvektion verbessert werden, je kleiner die Breite des (kleinen) Spalts ist. Die Begriffe Auskopplungsort am Kaltkopf und Einkopplungsort am Adsorberbett definieren keine bestimmte Wärmeflussrichtung.

Der Auskopplungsbereich am Kaltkopf wird durch die in Erstreckungsrichtung des Kaltkopfs am weitesten auseinanderliegenden Auskopplungsorte begrenzt. Ebenso wird der Einkopplungsbereich am Adsorberbett durch die in Erstreckungsrichtung des Kaltkopfs am weitesten auseinander liegenden Einkopplungsorte begrenzt. Die Länge des Auskopplungsbereichs in Erstreckungsrichtung des Kaltkopfs von wenigstens 5 cm, bevorzugt wenigstens 8 cm, besonders bevorzugt wenigstens 10 cm, stellt sicher, dass im Betrieb am Kaltkopf unterschiedlich kalte Bereiche des Kaltkopfs zur Kühlung des Adsorberbetts genutzt werden. Die Länge des Auskopplungsbereichs in Erstreckungsrichtung des Kaltkopfs von wenigstens 5 cm, bevorzugt wenigstens 8 cm, besonders bevorzugt wenigstens 10 cm, stellt sicher, dass im Betrieb entsprechend unterschiedliche kalte Bereiche im Adsorberbett für das Ausfrieren der verschiedenen Verunreinigungen des zu reinigenden Heliumgases eingerichtet werden.

In vorteilhafter Weise kann das Adsorberbett so ausgeformt sein, dass es zumindest lokal einen Anteil ANT des für einen Heliumgasfluss zur Verfügung stehenden Querschnitts des Gasraums (senkrecht zur Erstreckungsrichtung des Kaltkopfs) einnimmt, mit ANT ≥ 90%, bevorzugt ANT ≥ 95%, besonders bevorzugt ANT = 100%. In besonders vorteilhafter Weise kann das Adsorberbett so ausgeformt sein, dass es über eine Reinigungslänge in Erstreckungsrichtung des Kaltkopfs von wenigstens 5 cm, bevorzugt wenigstens 8 cm, besonders bevorzugt wenigstens 10 cm, den Anteil ANT des für einen Heliumgasfluss zur Verfügung stehenden Querschnitts des Gasraums, gemessen senkrecht zur Erstreckungsrichtung des Kaltkopfs, einnimmt.

Durch einen hohen Wert von ANT wird der Anteil von zu reinigendem Heliumgas, das am Adsorbermaterial vorbei strömen kann, minimiert, und dadurch die Reinigungswirkung der Vorrichtung bzw. des Adsorberbetts maximiert. Bevorzugt entspricht die Reinigungslänge, in der der hohe Anteil ANT gegeben ist, wenigstens 75%, bevorzugt wenigstens 90%, ganz besonders bevorzugt 100% der Länge des Einkopplungsbereichs.

Bei der Bestimmung von ANT werden Bereiche von Porosität innerhalb des Adsorbers dem vom Adsorberbett eingenommenen Anteil des Querschnitts des Gasraums zugerechnet. Der lokale Querschnitt des Gasraums entspricht typischerweise dem lokalen Innenquerschnitt eines Kaltkopfbehälters oder eines Halsrohrs des Speichergefäßes, abzüglich des lokalen Querschnitts des Kaltkopfs.

Das Adsorberbett ist bevorzugt so im Gasraum angeordnet, dass der vollständige Gasstrom von zu reinigendem Helium das Adsorberbett durchfließen muss, insbesondere über eine Mindestlänge von 5 cm, bevorzugt 8 cm, besonders bevorzugt 10 cm, entlang der Erstreckungsrichtung des Kaltkopfs und/oder unter Durchdringung von zwei Adsorberbettbereichen mit einer Temperaturdifferenz von wenigstens 50 K, bevorzugt 100 K. Um den Heliumgasstrom vollständig durch das Adsorberbett zu führen wird der Querschnitt des Gasraums vollständig vom Adsorberbett eingenommen (ANT=100%). Entsprechend können praktisch alle Verunreinigungen aus dem der Vorrichtung von außen zufließenden, zu reinigenden Heliumgas im Adsorberbett ausgefiltert (ausgefroren) werden, und die kälteste Kaltstufe ist besonders gut vor Verunreinigungen geschützt.

Bevorzugte Varianten der Erfindung

Bei einer bevorzugten Variante der erfindungsgemäßen Vorrichtung ist vorgesehen, dass die Auskopplungs-Temperaturdifferenz am Kaltkopf zwischen dem hintersten, dem raumtemperaturwarmen Ende des Kaltkopfs am nächsten liegenden Auskopplungsort und dem vordersten, der kältesten Kühlstufe am nächsten liegenden Auskopplungsort wenigstens 100 K beträgt,

und dass die Einkopplungs-Temperaturdifferenz am Adsorberbett zwischen dem hintersten, dem raumtemperaturwarmen Ende des Kaltkopfs am nächsten liegenden Einkopplungsort und dem vordersten, der kältesten Kühlstufe am nächsten liegenden Einkopplungsort wenigstens 100 K beträgt. Auch diese Temperaturdifferenzen lassen sich in der Praxis gut einrichten, und führen zu einer erheblichen Steigerung der thermodynamischen Effizienz, verglichen mit einer einheitlichen Adsorbertemperatur. Die verschiedenen Verunreinigungen können bei einer vergleichsweise hohen, und oft bei der höchstmöglichen Temperatur ausgefroren werden.

Bevorzugt ist weiterhin eine Ausführungsform, die vorsieht, dass zwischen zumindest einem Teilabschnitt des Kaltkopfs und zumindest einem Teilabschnitt des Adsorberbetts entlang der Erstreckungsrichtung des Kaltkopfs eine kontinuierliche thermische Kopplung eingerichtet ist,

wobei sich der jeweilige Teilabschnitt des Kaltkopfs in Erstreckungsrichtung des Kaltkopfs über wenigstens eine Länge von 5 cm erstreckt, und der jeweilige Teilabschnitt des Adsorberbetts in Erstreckungsrichtung des Kaltkopfs über wenigstens eine Länge von 5 cm erstreckt. Die kontinuierliche thermische Kopplung erfolgt grundsätzlich zumindest näherungsweise orthogonal zur Erstreckungsrichtung. Durch die kontinuierlich eingerichtete thermische Kopplung zwischen dem Teilabschnitt des Kaltkopfs und dem Teilabschnitt des Adsorberbetts kann in dem Teilabschnitt des Adsorberbetts ein Temperaturgradient eingerichtet werden, so dass im Adsorberbett (innerhalb des vom Temperaturgradienten überspannten Temperaturbereichs) alle Temperaturen vorkommen; eine Verunreinigung, deren Adsorptionstemperatur in diesem überspannten Temperaturbereich liegt, kann bei der Adsorptionstemperatur ausfrieren. Zum anderen kann die Kühlleistung des Kaltkopfs, der ebenfalls einen Temperaturgradienten ausbildet, bei der Adsorptionstemperatur der Verunreinigung zur Verfügung gestellt werden. Dies ist thermodynamisch hoch effizient. Die Längen des jeweiligen Teilabschnitts des Kaltkopfs und des Adsorberbetts in Erstreckungsrichtung des Kaltkopfs haben sich in der Praxis besonders bewährt; bevorzugt betragen die Längen der Teilabschnitte wenigstens 8 cm, besonders bevorzugt wenigstens 10 cm in Erstreckungsrichtung des Kaltkopfs. Über diese Längen kann in der Regel ein ausreichend großer Temperaturgradient eingerichtet werden. Ein Teilabschnitt des Kaltkopfs (und ein zugehöriger Teilabschnitt des Adsorberbetts) kann zwischen dem raumtemperaturwarmen Endabschnitt und der wärmsten Kühlstufe eingerichtet sein. Ein jeweiliger weiterer Teilabschnitt des Kaltkopfs (und ein zugehöriger Teilabschnitt des Adsorberbetts) kann jeweils zwischen zwei Kühlstufen (zB der wärmsten Kühlstufe und der kältesten Kühlstufe bei einem insgesamt zweistufigen Kaltkopf) eingerichtet sein. Ein jeweiliger Teilabschnitts des Kaltkopfs erstreckt sich typischerweise wenigstens über die Hälfte einer Länge eines Regeneratorrohres, das zwischen dem raumtemperaturwarmen Endabschnitt und der wärmsten Kühlstufe oder zwischen zwei Kühlstufen des Kaltkopfs verläuft. Ein Teilabschnitt des Kaltkopfs und ein Teilabschnitt des Adsorberbetts, zwischen denen eine kontinuierliche thermische Kopplung eingerichtet ist, umfassen jeweils eine Vielzahl von Auskopplungsorten bzw. Einkopplungsorten.

In einer bevorzugten Weiterbildung dieser Ausführungsform ist vorgesehen, dass ein hinterer Teilabschnitt des Kaltkopfs zwischen dem raumtemperaturwarmen Endabschnitt und der wärmsten Kühlstufe eingerichtet ist, und ein mit diesem kontinuierlich thermisch gekoppelter, hinterer Teilabschnitt des Adsorberbetts eingerichtet ist,

wobei die wärmste Kühlstufe eine Temperatur $T_w$ aufweist,
dass entlang des hinteren Teilabschnitts des Kaltkopfs in Erstreckungsrichtung des Kaltkopfs der Kaltkopf einen kontinuierlichen Temperaturgradienten aufweist, der eine Temperaturdifferenz $TD_{HKK}$ mit $TD_{HKK} \geq (293K - T_w)/2$ überspannt,
und dass entlang des hinteren Teilabschnitts des Adsorberbetts in Erstreckungsrichtung des Kaltkopfs das Adsorberbett einen kontinuierlichen Temperaturgradienten aufweist, der eine Temperaturdifferenz $TD_{HAD}$ mit $TD_{HAD} \geq (293K - T_w)/2$ überspannt. Durch das so eingerichtete Adsorberbett können Verunreinigungen des zu reinigenden Heliumgases, deren Adsorptionstemperaturen oberhalb der Temperatur $T_w$ der wärmsten Kühlstufe liegen, bei oder nahe ihrer Adsorptionstemperatur ausgefroren werden, was thermodynamisch effizient ist. Für $T_w$ gilt meist $T_w \geq 40K$ oder $T_w \geq 50K$, und/oder weiterhin $T_w \leq 150K$ oder $T_w \leq 100K$ oder $T_w \leq 80K$.

Weiterhin bevorzugt ist eine Weiterbildung dieser Ausführungsform, die dadurch gekennzeichnet ist, dass wenigstens ein weiterer Teilabschnitt des Kaltkopfs zwischen einer wärmeren Kühlstufe und einer kälteren Kühlstufe des Kaltkopfs eingerichtet ist, und wenigstens ein mit diesem kontinuierlich thermisch gekoppelter, weiterer Teilabschnitt des Adsorberbetts eingerichtet ist,

wobei jeweils die wärmere Kühlstufe eine obere Temperatur $T_{ob}$ aufweist und die kältere Kühlstufe eine untere Temperatur $T_{unt}$ aufweist,
dass jeweils entlang des weiteren Teilabschnitts des Kaltkopfs in Erstreckungsrichtung des Kaltkopfs der Kaltkopf einen kontinuierlichen Temperaturgradienten aufweist, der eine Temperaturdifferenz $TD_{WKK}$ mit

$TD_{WKK} \geq (T_{ob}-T_{unt})/2$ überspannt,

und dass jeweils entlang des weiteren Teilabschnitts des Adsorberbetts in Erstreckungsrichtung des Kaltkopfs das Adsorberbett einen kontinuierlichen Temperaturgradienten aufweist, der eine Temperaturdifferenz $TD_{WAD}$ mit $TD_{WAD} \geq (T_{ob}-T_{unt})/2$ überspannt. Durch ein weiteres so eingerichtetes Adsorberbett können Verunreinigungen des zu reinigenden Heliumgases, deren Adsorptionstemperaturen unterhalb der Temperatur $T_{ob}$ und oberhalb der Temperatur $T_{unt}$ liegen, nahe oder bei ihren Adsorptionstemperaturen ausgefroren werden, was thermodynamisch effizient ist. Umfasst der Kaltkopf genau zwei Kühlstufen, so ist $T_{ob}$ zugleich $T_w$, und die Temperatur $T_{unt}$ ist zugleich $T_k$ und ist so gewählt, dass Helium verflüssigt werden kann.

Bevorzugt ist auch eine Ausführungsform, bei der das vakuumisolierte Speichergefäß mit einem Halsrohr ausgebildet ist, wobei der Kaltkopf in das Halsrohr hineinragt und das Adsorberbett im Halsrohr angeordnet ist, und eine Innenwand des Halsrohrs den Gasraum lateral begrenzt, und der Gasraum nach unten hin in das vakuumisolierte Speichergefäß offen ist. Dieser Aufbau ist besonders einfach und kostengünstig; zudem können relativ große Querschnitte für die Reinigung des Heliumgases eingerichtet werden.

Ebenso bevorzugt ist eine Ausführungsform, bei der die Vorrichtung einen Kaltkopfbehälter umfasst, wobei der Kaltkopf in den Kaltkopfbehälter hineinragt und das Adsorberbett im Kaltkopfbehälter angeordnet ist, und wobei der Kaltkopfbehälter den Gasraum nach außen begrenzt. Der Kaltkopfbehälter erleichtert die Führung des Heliumgasstroms im Gasraum. Das Adsorberbett kann besonders einfach um den Kaltkopf platziert und fixiert werden, insbesondere einfacher als im Falle einer direkten Anordnung von Kaltkopf und Adsorberbett im Halsrohr des Speichergefäßes. Zudem kann mit dem Kaltkopfbehälter eine gewisse thermische Isolation von der Umgebung des Kaltkopfbehälters erreicht werden, insbesondere während einem Ausheizen des Adsorberbetts.

Eine bevorzugte Weiterbildung ist dadurch gekennzeichnet, dass der Kaltkopfbehälter vakuumisoliert ausgebildet ist. Hierdurch kann der Kaltkopfbehälter thermisch besser von seiner Umgebung isoliert werden. Besonders während eines Ausheizens des Adsorberbetts kann der Wärmeeintrag vom Kaltkopfbehälter in das vakuumisolierte Speichergefäß minimiert werden.

Vorteilhaft ist eine Weiterentwicklung dieser Weiterbildung, bei der der Kaltkopfbehälter außerhalb des vakuumisolierten Speichergefäßes angeordnet ist, insbesondere wobei ein unterseitiger Ablauf des Kaltkopfbehälters über eine Leitung mit dem vakuumisolierten Speichergefäß verbunden ist. Dadurch kann während eines Ausheizens des Adsorberbetts der Wärmeeintrag vom Kaltkopfbehälter in das vakuumisolierte Speichergefäß minimiert werden. Zudem ist eine Auftrennung von Speichergefäß und der Baugruppe des Kaltkopfbehälters vereinfacht möglich, um beispielsweise die Baugruppe und insbesondere den Kaltkopf von starken Magnetfeldern fern zu halten, wenn das Speichergefäß für einen Heliumtransfer in unmittelbare Nähe eines supraleitenden Magnets gebracht werden muss. Die Leitung ist bevorzugt mit einer thermischen Isolation versehen.

Eine vorteilhafte Weiterbildung sieht vor, dass der Kaltkopfbehälter in das vakuumisolierten Speichergefäß hineinragt, insbesondere in ein Halsrohr des vakuumisolierten Speichergefäßes. Das im Kaltkopfbehälter verflüssigte Helium kann dann direkt in das vakuumisolierte Speichergefäß abgelassen werden, wodurch ein Wärmeeintrag in das verflüssigte Helium und Wärmeverluste im Transferpfad zwischen Kaltkopfbehälter und Speichergefäß minimiert sind. Weiterhin kann der Platzbedarf der Vorrichtung verringert werden.

Bei einer besonders bevorzugten Weiterentwicklung dieser Weiterbildung weist der Kaltkopfbehälter eine Ablauf-Kapillare für flüssiges Helium auf, die durch eine unterseitige Gefäßwand des Kaltkopfbehälters zum vakuumisolierten Speichergefäß führt und am inneren Boden des Kaltkopfbehälters im Gasraum mündet, insbesondere wobei die Ablauf-Kapillare für flüssiges Helium mit einem verschließbaren Ventil ausgebildet ist. Mit der Ablauf-Kapillare ist eine Übergabe verflüssigten Heliums vom Kaltkopfbehälter in das Speichergefäß auf einfache Weise möglich, wobei beim Ausheizen des Adsorberbetts über die Ablauf-Kapillare nur ein minimaler Wärmeeintrag vom Kaltkopfbehälter in das vakuumisolierten Speichergefäß erfolgen kann. Das verschließbare Ventil kann während eines Ausheizens des Adsorberbetts verschlossen werden, um den Wärmeeintrag in das Speichergefäß weiter zu minimieren. Das verschließbare Ventil ist typischerweise am gasraumseitigen Ende der Ablauf-Kapillare angeordnet.

Vorteilhaft ist eine Weiterentwicklung, die vorsieht, dass der Kaltkopfbehälter eine Rückführungs-Kapillare für verdampftes Helium aus dem vakuumisolierten Speichergefäß aufweist, die durch eine unterseitige Gefäßwand des Kaltkopfbehälters führt und oberhalb eines inneren Bodens des Kaltkopfbehälters im Gasraum mündet, insbesondere an der kältesten Kühlstufe, insbesondere wobei die Rückführungs-Kapillare für verdampftes Helium mit einem verschließbaren Ventil ausgebildet ist. Mit der Rückführungs-Kapillare kann verdampftes Helium aus dem vakuumisolierten Speichergefäß für eine Verflüssigung zum Kaltkopf rückgeführt werden. Wenn die Rückführungs-Kapillare direkt an der kältesten Kaltstufe mündet, wärmt sich das verdampfte Helium, das ja näherungsweise eine Temperatur von 4,2 K hat, nicht über Gebühr auf, bevor es an der Kaltstufe wieder verflüssigt wird. Außerdem ist eine Vermischung mit noch nicht (vollständig) gereinigtem Helium im Gasraum minimiert. Indem die Rückführungs-Kapillare oberhalb des inneren Bodens mündet, wird ein Rückfluss von im Kaltkopfbehälter verflüssigtem Helium durch die Rückführungs-Kapillare (und damit eine Blockade der Rückführungs-Kapillare für gasförmiges Helium) verhindert. Durch die Rückführungs-Kapillare erfolgt beim Ausheizen des Adsorberbetts allenfalls ein minimaler Wärmeeintrag vom Kaltkopfbehälter in das vakuumisolierten Speichergefäß. Das verschließbare Ventil der Rückführungs-Kapillare, welches am gasraumseitigen Ende der Rückführungs-Kapillare angeordnet sein kann, wird während eines Ausheizens des Adsorberbetts verschlossen, um den Wärmeeintrag in das Speichergefäß weiter zu minimieren.

Vorteilhaft ist bei den obigen Weiterentwicklungen vorgesehen, dass die Ablauf-Kapillare für flüssiges Helium und/oder die Rückführungs-Kapillare für verdampftes Helium innerhalb der unterseitigen Gefäßwand des Kaltkopfbehälters eine Länge L aufweisen, die größer ist als eine Wandstärke der unterseitigen Gefäßwand,

insbesondere wobei die Ablauf-Kapillare und/oder die Rückführungs-Kapillare spiralförmig ausgebildet sind. Hierdurch kann der Wärmeeintrag über die Kapillaren vom Kaltkopfbehälter zum vakuumisolierten Speichergefäß beim Ausheizen des Adsorberbetts noch weiter verringert werden. Die größere Kapillarlänge L erhöht den Wärmeleitungswiderstand.

In einer weiteren bevorzugen Weiterentwicklung ist an einem oberen Ende des Kaltkopfbehälters, das nahe dem raumtemperaturwarmen Endabschnitt des Kaltkopfs angeordnet ist, wenigstens eine Durchführung für verdampftes Helium aus dem vakuumisolierten Speichergefäß ausgebildet,

insbesondere wobei innerhalb des vakuumisolierten Speichergefäßes zwischen einer Innenwand des vakuumisolierten Speichergefäßes und einer Außenwand des Kaltkopfbehälters ein ringförmiger Spaltraum eingerichtet ist und die wenigstens eine Durchführung von einem oberen Bereich des ringförmigen Spaltraums in einen oberen Bereich des Kaltkopfbehälters führt. Auf diese Weise kann verdampftes Helium, welches im Speichergefäß aufsteigt, insbesondere im Halsrohr, gleich wieder dem Kaltkopfbehälter zugeführt und verflüssigt werden. Durch den Ringspalt können das Halsrohr und die Wand des Kaltkopfbehälters durch das aufsteigende gasförmige Helium über seinen gesamten Umfang gekühlt werden. Im Kaltkopfbehälter sollte sichergestellt sein, dass über den Einspeisungsanschluss von außen zugeführtes, zu reinigendes Heliumgas vor allem entlang des Kaltkopfs durch das Adsorberbett fließt, und nicht ungereinigt vom Kaltkopfbehälter durch die Durchführung direkt in das Speichergefäß bzw. Ringspalt; hierfür können die Durchführung und der Einspeisungsanschluss im Kaltkopfbehälter insbesondere durch eine geeignete Stärke von Adsorberbettmaterial voneinander getrennt sein.

Bevorzugt bei obiger Weiterentwicklung ist es, wenn im Kaltkopfbehälter wenigstens eine Strömungsleitung ausgebildet ist, die von der wenigstens einen Durchführung am oberen Ende des Kaltkopfbehälters entlang des Kaltkopfs zur kältesten Kühlstufe führt und in einem unteren Bereich des Gasraums mündet. Dadurch kann auf einfache Weise eine Konvektion von sauberem bzw. bereits gereinigtem, gasförmigen Heliumgas aus dem Speichergefäß außen am Kaltkopfbehälter vorbei und zurück durch den Kaltkopfbehälter unterhalten werden, ohne dass im Gasraum eine Vermischung mit noch nicht gereinigtem Heliumgas eintritt, wobei das bereits saubere Heliumgas aus dem Speichergefäß an der kältesten Kaltstufe wieder verflüssigt wird.

*Ausführungsformen zu einem Aufsatzteil*

Eine bevorzugte Ausführungsform sieht vor, dass das vakuumisolierte Speichergefäß einen vakuumisolierten Hauptteil und sowie einen Aufsatzteil aufweist, und dass ein Trennschieber zwischen Hauptteil und Aufsatzteil vorhanden ist, wobei in einem geschlossenen Zustand des Trennschiebers der Hauptteil am Trennschieber gasdicht verschlossen ist, und in einem offenen Zustand des Trennschiebers die Innenräume von Hauptteil und Aufsatzteil zueinander offen sind. Im Aufsatzteil können zumindest zeitweise der Kaltkopf und das Adsorberbett angeordnet sein. Durch das gasdichte Abtrennen des Hauptteils vom Aufsatzteil mittels des Trennschiebers können der Hauptteil (mit dem verflüssigten Helium) und der Aufsatzteil (typischerweise mit dem Kaltkopf und dem Adsorberbett) thermisch voneinander weitestgehend getrennt werden. Werden beispielsweise der Kaltkopf und das Adsorberbett regeneriert (ausgeheizt), kann somit der Wärmeeintrag aus Richtung des Aufsatzteils in den Hauptteil bzw. das verflüssigte Helium verringert oder ganz verhindert werden. Der Aufsatzteil kann ebenfalls vakuumisoliert ausgebildet sein, oder ohne Vakuumisolierung ausgebildet sein. Typischerweise ist der Trennschieber im Bereich eines Halsrohrs des vakuumisolierten Speichergefäßes ausgebildet.

In einer bevorzugten Weiterbildung dieser Ausführungsform ist vorgesehen, dass der Aufsatzteil mit einer flexiblen Wandung, insbesondere einem Faltenbalg, ausgebildet ist,

dass eine Baugruppe zumindest umfassend den Kaltkopf und das Adsorberbett gegenüber dem Hauptteil des vakuumisolierten Speichergefäßes verfahrbar ausgebildet ist,
und dass in einem ausgefahrenen Zustand die Baugruppe sich lediglich im Aufsatzteil, nicht aber im Hauptteil, erstreckt, so dass der Trennschieber geschlossen werden kann, und in einem eingefahrenen Zustand die Baugruppe in den Hauptteil hineinragt. In dieser Bauform kann die Baugruppe, die den Kaltkopf und das Adsorberbett umfasst, einfach und unkompliziert in den Hauptteil des vakuumisolierten Speichergefäßes versenkt oder aus diesem herausgezogen werden, wobei die Abdichtung des Speichergefäßes jederzeit aufrecht erhalten bleibt. Im eingefahrenen Zustand ist der Kaltkopf besonders nahe beim verflüssigten Helium im Speichergefäß, und es kann eine gute thermodynamische Effizienz erreicht werden. Zusätzlich kann der Platzbedarf im eingefahrenen Zustand der Vorrichtung (im Verflüssigungsbetrieb) verringert werden. Ebenso kann die Baugruppe im Aufsatzteil im ausgefahrenen Zustand (für den Regenerationsbetrieb) thermisch weitgehend vom Hauptteil getrennt werden, indem der Trennschieber geschlossen wird. Falls ein Kaltkopfbehälter vorgesehen ist, gehört dieser auch zur verfahrbaren Baugruppe. Der Faltenbalg kann insbesondere als metallischer Faltenbalg ausgebildet sein.

Eine weitere bevorzugte Weiterbildung sieht vor, dass im geschlossenen Zustand des Trennschiebers der Hauptteil und der Aufsatzteil voneinander abtrennbar sind, wobei der Kaltkopf und das Adsorberbett sich lediglich im Aufsatzteil, nicht aber im Hauptteil, erstrecken. Der Hauptteil kann im abgetrennten Zustand zu einem vom Aufsatzteil entfernten Ort verbracht werden, während der Kaltkopf und das wenigstens eine Adsorberbett am Ort des Aufsatzteils verbleiben. Wird der Hauptteil beispielsweise in die Nähe eines starken NMR-Magneten gebracht, um dort flüssiges Helium zur Kühlung nachzufüllen, kann der Aufsatzteil mit Kaltkopf und Adsorberbett separat und entfernt gelagert werden; dann braucht der Kaltkopf nicht kompatibel mit (gegebenenfalls großen) magnetischen Streufeldern ausgebildet zu sein, was die Konstruktion des Kaltkopfs erheblich vereinfacht bzw. den Kaltkopf erheblich verbilligt. Da der Kaltkopf im Aufsatzteil mit einer Vielzahl von Gasleitungen (z.B. zu einem Kompressor) und elektrischen Leitungen verbunden ist, vereinfacht sich die Bedienung stark, wenn das Aufsatzteil immer an Ort und Stelle verbleiben kann, und nicht weit verschoben werden muss, was ein Auftrennen der Leitungen nötig machen würde.

*Weitere Ausführungsformen*

Bevorzugt ist auch eine Ausführungsform, die dadurch gekennzeichnet ist,

dass an dem raumtemperaturwarmen Endabschnitt des Kaltkopfs ein Abführanschluss für Verunreinigungen ausgebildet ist,
insbesondere wobei weiterhin eine Spülleitung für ein Spülgas vom raumtemperaturwarmen Endabschnitt des Kaltkopfs zur kältesten Kühlstufe führt und in einem unteren Bereich des Gasraums mündet,
und insbesondere wobei der Abführanschluss an eine Abführleitung angeschlossen ist, in der eine Absaugpumpe angeordnet ist. Verunreinigungen können so einfach abgeführt werden. Hierzu kann die Temperatur von Kaltkopf und Adsorberbett beispielsweise auf Raumtemperatur erhöht werden. Durch das Spülgas (beispielsweise Helium, Argon oder Stickstoff), das mit der Spülleitung nahe der kältesten Kaltstufe eingebracht wird, kann der Gasraum entgegen der Strömungsrichtung des Normalbetriebs in Richtung auf den raumtemperaturwarmen Endabschnitt zu gespült werden, wo der Abführanschluss ausgebildet ist.

Dadurch können Verunreinigungen besonders schnell und vollständig entfernt werden. Durch eine Absaugpumpe (beispielsweise eine Ölschieberpumpe oder eine Membranpumpe) können Verunreinigungen effizient abgesaugt werden; durch Unterdruck im Gasraum wird der Partialdruck von Verunreinigungen erniedrigt und diese können noch leichter desorbieren.

Auch bevorzugt ist eine Ausführungsform, bei der im vakuumisolierten Speichergefäß ein Füllstandsensor für flüssiges Helium ausgebildet ist. So kann der Füllstand und der Zeitpunkt bestimmt werden, an dem das Speichergefäß entleert oder nicht mehr weiter befüllt werden sollte. Das verflüssigte Helium kann beispielsweise über einen Anschluss (Port) am vakuumisolierten Speichergefäß entnommen werden.

Ebenso bevorzugt ist eine Ausführungsform, die vorsieht, dass im vakuumisolierten Speichergefäß ein Speichergefäß-Heizelement vorgesehen ist, mit dem Helium im vakuumisolierten Speichergefäß beheizbar ist. Dadurch kann, falls nötig, der Druck im Speichergefäß erhöht werden.

Bevorzugt ist weiterhin eine Ausführungsform, die dadurch gekennzeichnet ist, dass wenigstens ein Adsorber-Heizelement vorgesehen ist, mit dem das Adsorberbett beheizbar ist. Auf diese Weise kann das Adsorberbett in der Phase der Regeneration schneller erwärmt werden. Außerdem können Verunreinigungen, die höhere Siedepunkte aufweisen, effektiver vom Adsorberbett befreit werden. Typischerweise wird das Adsorberbett auf Raumtemperatur erwärmt, in Einzelfällen auch auf eine höhere Temperatur.

Ebenso bevorzugt ist eine Ausführungsform, in der jeweils ein Temperatursensor im vakuumisolierten Speichergefäß und/oder am Kaltkopf, insbesondere an der kältesten Kühlstufe, und/oder an dem Adsorberbett ausgebildet ist. Hierdurch kann die Vorrichtung überwacht und ggf. gesteuert werden. Insbesondere können gegebenenfalls Fehlfunktion oder Unregelmäßigkeit entdeckt werden, oder auch der Zeitpunkt der Regeneration von Kaltkopf und Adsorberbett bestimmt werden.

Eine weitere bevorzugte Ausführungsform ist dadurch gekennzeichnet, dass wenigstens eine optische Kontrolleinrichtung vorhanden ist, mit der eine Beladung von wenigstens einer der Kühlstufen des Kaltkopfs mit Verunreinigungen überwachbar ist, insbesondere wobei die wenigstens eine optische Kontrolleinrichtung über eine Glasfaserleitung verfügt. Durch diese optische Kontrolleinrichtung kann der Zeitpunkt für die Regeneration des Kaltkopfs bestimmt werden. Eine Regeneration sollte insbesondere dann erfolgen, wenn die beobachtete Kühlstufe des Kaltkopfs sichtbar durch eine gefrorene Schicht von Verunreinigungen komplett bedeckt ist. Bevorzugt ist für jede Kühlstufe eine optische Kontrolleinrichtung vorgesehen. Für Beleuchtungszwecke kann eine weitere Glasfaserleitung vorgesehen sein.

Bevorzugt ist auch eine Ausführungsform, bei der ein Überwachungsgerät vorhanden ist, welches bei Vorliegen

- einer Druckdifferenz zwischen dem Einspeisungsanschluss und dem vakuumisolierten Speichergefäß größer einem Druckdifferenz-Grenzwert, wobei ein definierter Heliumzufluss am Einspeisungsanschluss eingerichtet ist, oder
- einer Flussrate von am Einspeisungsanschluss zugeführtem Helium kleiner einem Flussraten-Grenzwert, wobei am Einspeisungsanschluss und im vakuumisolierten Speichergefäß definierte Drücke eingeregelt sind,

ein Signal erzeugt, um auf die Notwendigkeit einer Regeneration des Adsorberbetts hinzuweisen, und/oder eine Regeneration des Adsorberbetts automatisch einleitet. Damit kann auf einfache Weise der Zeitpunkt der Regeneration des Adsorberbetts bestimmt und der Anwender darauf aufmerksam gemacht werden. Ebenso kann auf diese einfache Weise eine automatische Regeneration des Adsorberbetts eingerichtet werden. Der Druckdifferenz-Grenzwert kann abhängig vom eingerichteten Heliumdurchfluss als Grenzkurve definiert sein. Der Flussraten-Grenzwert kann abhängig von den eingeregelten Drücken als Grenzfläche definiert sein oder abhängig von der eingeregelten Druckdifferenz als Grenzkurve.

Eine weitere bevorzugte Ausführungsform sieht vor, dass das Adsorberbett eine Aktivkohleschüttung umfasst und/oder ein Material enthält, welches eine innere Oberfläche von wenigstens 300 m$^2$/g aufweist, bevorzugt wenigstens 900 m$^2$/g aufweist. An dieser großen, inneren Oberfläche können die Verunreinigungen ausgefroren werden. Eine größere innere Oberfläche kann zudem eine größere Beladung mit Verunreinigungen ermöglichen, wodurch das Adsorberbett seltener regeneriert werden muss.

Ebenso bevorzugt ist eine Ausführungsform, die dadurch gekennzeichnet ist, dass das vakuumisolierte Speichergefäß mit einem Drucksensor versehen ist, und dass weiterhin ein Steuergerät vorhanden ist, das dazu ausgebildet ist, eine Heizleistung an einem Speichergefäß-Heizelement und/oder eine Kühlleistung am Kaltkopf in Abhängigkeit vom Druck im vakuumisolierten Speichergefäß zu regeln, insbesondere so dass der Druck im vakuumisolierten Speichergefäß nicht unter einen unteren Grenzdruck $P_{untgr}$ fällt und nicht über einen oberen Grenzdruck $P_{obgr}$

ansteigt. Hierdurch kann verhindert werden, dass ein Unterdruck im vakuumisolierten Speichergefäß entsteht (z.B. wenn die Kühlleistung des Kaltkopfes die Wärmelast auf das Heliumbad überschreitet) und Luft aus der Umgebung eingebracht (eingesaugt) wird. Ebenso kann verhindert werden, dass ein Überdruck im vakuumisolierten Speichergefäß entsteht, der zur Folge hätte, dass Helium über ein Sicherheitsventil entweicht und verloren geht.

*Erfindungsgemäßes Heliumrückgewinnungssystem*

In den Rahmen der vorliegenden Erfindung fällt auch ein Heliumrückgewinnungssystem, umfassend eine oben beschriebene, erfindungsgemäße Vorrichtung zum Reinigen und Verflüssigen von Helium sowie wenigstens ein heliumgekühltes Anwendungsgerät und einen Ballonspeicher für gasförmiges Helium,

wobei an den Einspeisungsanschluss über eine Verzweigung eine erste Zuleitung für gasförmiges Helium und eine zweite Zuleitung für gasförmiges Helium angeschlossen sind,
wobei die erste Zuleitung vom Ballonspeicher zur Verzweigung führt, insbesondere wobei die erste Zuleitung weiterhin einen Kompressor und einen Druckspeicher für gasförmiges Helium enthält,
und wobei die zweite Zuleitung vom wenigstens einen heliumgekühlten Anwendungsgerät unter Umgehung des Ballonspeichers zur Verzweigung führt. Ein so eingerichtetes Heliumrückgewinnungssystem kann flexibel in unterschiedlichen Situationen verwendet werden. Der Ballonspeicher für gasförmiges Helium kann verwendet werden, wenn in kurzer Zeit große Mengen gasförmigen Heliums entstehen, beispielsweise beim Nachfüllen von flüssigem Helium in ein heliumgekühltes Anwendungsgerät. Hierdurch kann eine Überlastung der Vorrichtung (also des Kaltkopfs und des Adsorberbetts bei Reinigung und Verflüssigung) verhindert werden und das entstandene Heliumgas kann später langsam aus dem Ballonspeicher der Vorrichtung zugeführt werden, gegebenenfalls auch über einen Kompressor und Hochdruckspeicher. Während des normalen Betriebs heliumgekühlter Anwendungsgeräte ist es von Vorteil, verdampfendes Helium direkt (unter Umgehung des Ballonspeichers) zum Kaltkopf und Adsorberbett zu leiten, da die Mengen abdampfenden Heliums meist gering sind und das abgedampfte Helium meist sehr trocken und rein ist. Der Umweg über den Ballonspeicher, an welchem meist nicht unerheblich Feuchtigkeit oder Luft eingebracht wird, kann so vermieden und eine Verunreinigung des Heliumgases auf dem Weg vom Anwendungsgerät zur Vorrichtung wesentlich verringert oder ganz vermieden werden.

*Erfindungsgemäßes Verfahren zur Reinigung und Verflüssigung von Helium*

Weiterhin in den Rahmen der vorliegenden Erfindung fällt auch ein Verfahren zur Reinigung und Verflüssigung von Helium,

wobei ein zu reinigendes Heliumgas über ein Adsorberbett geleitet und dadurch aufgereinigt wird, wobei das Adsorberbett mit einem Kaltkopf gekühlt wird, wobei der Kaltkopf wenigstens zwei Kühlstufen umfasst, nämlich zumindest eine wärmste Kühlstufe, die bei einer Temperatur $T_w$ betrieben wird, und eine kälteste Kühlstufe, die bei einer Temperatur $T_k$ betrieben wird, mit $T_w > T_k$,

und wobei durch das Adsorberbett gereinigtes Heliumgas verflüssigt wird, und verflüssigtes Helium in einem vakuumisolierten Speichergefäß gesammelt wird, wobei das zu reinigende Heliumgas in einen Gasraum geleitet wird, in welchen der Kaltkopf mit seinen Kühlstufen einragt und der das Adsorberbett enthält, wobei das zu reinigende Heliumgas durch den Gasraum von einem raumtemperaturwarmen Endabschnitt des Kaltkopfs, an welchem ein Einspeisungsanschluss für das zu reinigende Heliumgas ausgebildet ist, entlang des Kaltkopfs und über das Adsorberbett zu der kältesten Kühlstufe des Kaltkopfs geführt wird, deren Temperatur $T_k$ so gewählt ist, dass durch das Adsorberbett gereinigtes Heliumgas an der kältesten Kühlstufe verflüssigt wird,

und wobei eine thermische Kopplung des Kaltkopfs zum Adsorberbett von wenigstens zwei Auskopplungsorten am Kaltkopf zu wenigstens zwei Einkopplungsorten am Adsorberbett eingerichtet ist,

dadurch gekennzeichnet, dass die thermische Kopplung des Kaltkopfs zum Absorberbett derart eingerichtet ist,

dass eine Auskopplungs-Temperaturdifferenz am Kaltkopf zwischen einem hintersten, dem raumtemperaturwarmen Ende des Kaltkopfs am nächsten liegenden Auskopplungsort und einem vordersten, der kältesten Kühlstufe am nächsten liegenden Auskopplungsort wenigstens 50 K, bevorzugt wenigstens 100 K beträgt, und eine Einkopplungs-Temperaturdifferenz am Adsorberbett zwischen einem hintersten, dem raumtemperaturwarmen Ende des Kaltkopfs am nächsten liegenden Einkopplungsort und einem vordersten, der kältesten Kühlstufe am nächsten liegenden Einkopplungsort wenigstens 50 K, bevorzugt wenigstens 100 K beträgt.

Wird das zu reinigendes Heliumgas in den Gasraum geleitet, können Verunreinigungen wie etwa Wasser, Kohlenwasserstoffe, Sauerstoff oder Stickstoff im Adsorberbett bereits bei oder nahe an ihrer jeweiligen Adsorptionstemperatur ausgefroren werden. Das gereinigte Heliumgas wird an der kältesten Kaltstufe verflüssigt und im Speichergefäß gesammelt.

Das Adsorberbett und der Kaltkopf sind thermisch über mindestens zwei Aus- und Einkopplungsorte, die entlang der Erstreckungsrichtung des Kaltkopfs verteilt sind, gekoppelt. Es können mehrere diskrete (voneinander getrennte) Aus- und Einkopplungsorte eingerichtet sein, oder eine Vielzahl von Aus- und Einkopplungsorten folgt unmittelbar aufeinander, so dass praktisch eine kontinuierliche thermische Kopplung eingerichtet ist. Hierdurch können im Adsorberbett unterschiedliche Temperaturen für die Adsorption von Verunreinigungen bereitgestellt werden, wodurch erfindungsgemäß eine Anpassung oder Annäherung an die unterschiedlichen Adsorptionstemperaturen der unterschiedlichen Verunreinigungen erfolgt.

Die erfindungsgemäßen Auskopplungs-Temperaturdifferenzen und Einkopplungs-Temperaturdifferenzen lassen sich in der Praxis gut einrichten, und führen zu einer erheblichen Steigerung der thermodynamischen Effizienz, verglichen mit einer einheitlichen Adsorbertemperatur entsprechend der Adsorptionstemperatur der Verunreinigung mit der tiefsten Adsorptionstemperatur, die noch ausgefroren werden soll.

Das zu reinigende Heliumgas ("Gasstrom") wird bevorzugt so durch den Gasraum geleitet, dass dieses vollständig das Adsorberbett durchfließen muss, insbesondere über eine Mindestlänge von 5 cm, bevorzugt wenigstens 8 cm, besonders bevorzugt wenigstens 10 cm entlang der Erstreckungsrichtung des Kaltkopfs, und/oder unter Durchdringung von zwei Adsorberbettbereichen mit einer Temperaturdifferenz von wenigstens 50 K, bevorzugt 100K. Bevorzugt findet das Verfahren auf einer oben beschriebenen, erfindungsgemäßen Vorrichtung statt.

Bei einer bevorzugten Variante des erfindungsgemäßen Verfahrens ist vorgesehen,

dass der raumtemperaturwarme Endabschnitt und die Kühlstufen entlang einer Erstreckungsrichtung des Kaltkopfs aufeinander folgend angeordnet sind,

dass zwischen zumindest einem Teilabschnitt des Kaltkopfs und zumindest einem Teilabschnitt des Adsorberbetts entlang der Erstreckungsrichtung des Kaltkopfs eine kontinuierliche thermische Kopplung eingerichtet ist, derart,

dass entlang des Teilabschnitts des Kaltkopfs in Erstreckungsrichtung des Kaltkopfs der Kaltkopf einen kontinuierlichen Temperaturgradienten aufweist, der eine Temperaturdifferenz $TD_{TKK}$ mit $TD_{TKK} \geq 25K$, bevorzugt $TD_{TKK} \geq 50K$, überspannt,

und entlang des Teilabschnitts des Adsorberbetts in Erstreckungsrichtung des Kaltkopfs das Adsorberbett einen kontinuierlichen Temperaturgradienten aufweist, der eine Temperaturdifferenz $TD_{TAD}$ mit $TD_{TAD} \geq 25K$, bevorzugt $TD_{TAD} \geq 50K$, überspannt. Durch die kontinuierlich eingerichtete thermische Kopplung zwischen dem zumindest einen Teilabschnitt des Kaltkopfs und dem zumindest einen Teilabschnitt des Adsorberbetts kann in dem zumindest einen Teilabschnitt des Adsorberbetts ein Temperaturgradient eingerichtet werden, so dass im Adsorberbett (innerhalb des vom Temperaturgradienten überspannten Temperaturbereichs, vgl. die zugehörige Temperaturdifferenz $TD_{TAD}$) alle Temperaturen vorkommen. Die Temperaturdifferenzen $TD_{TKK}$ und $TD_{TAD}$ lassen sich in der Praxis gut einrichten, und führen zu einer erheblichen Steigerung der thermodynamischen Effizienz, verglichen mit einer einheitlichen Adsorbertemperatur entsprechend der Adsorptionstemperatur der Verunreinigung mit der tiefsten Adsorptionstemperatur, die ausgefroren werden soll. Die verschiedenen Verunreinigungen können in vielen Fällen bei oder besonders nahe bei ihrer jeweiligen Adsorptionstemperatur ausgefroren werden.

Vorteilhaft ist eine Weiterentwicklung dieser Variante, die dadurch gekennzeichnet ist,

dass ein hinterer Teilabschnitt des Kaltkopfs zwischen dem raumtemperaturwarmen Endabschnitt und der wärmsten Kühlstufe eingerichtet ist, und ein mit diesem kontinuierlich thermisch gekoppelter, hinterer Teilabschnitt des Adsorberbetts eingerichtet ist,
wobei der kontinuierliche Temperaturgradient am hinteren Teilabschnitt des Kaltkopfs eine Temperaturdifferenz $TD_{HKK}$ mit

$$TD_{HKK} \geq (293K - T_w)/2 \text{ überspannt,}$$

und der kontinuierliche Temperaturgradient am hinteren Teilabschnitt des Adsorberbetts eine Temperaturdifferenz $TD_{HAD}$ mit $TD_{HAD} \geq (293K - T_w)/2$ überspannt.

Durch das so eingerichtete Adsorberbett können Verunreinigungen des durchfließenden Heliumgases, deren Adsorptionstemperaturen oberhalb der Temperatur $T_w$ der wärmsten Kühlstufe liegen, an oder nahe bei ihrer Adsorptionstemperatur ausgefroren werden, was thermodynamisch effizient ist. Für $T_w$ gilt meist $T_w \geq 40K$ oder $T_w \geq 50K$, und/oder weiterhin $T_w \leq 150K$ oder $T_w \leq 100K$ oder $T_w \leq 80K$.
Bevorzugt ist auch eine Fortführung dieser Weiterentwicklung,

bei der wenigstens ein weiterer Teilabschnitt des Kaltkopfs zwischen einer wärmeren Kühlstufe und einer kälteren Kühlstufe des Kaltkopfs eingerichtet ist, und wenigstens ein mit diesem kontinuierlich thermisch gekoppelter, weiterer Teilabschnitt des Adsorberbetts eingerichtet ist,
wobei jeweils die wärmere Kühlstufe eine obere Temperatur $T_{ob}$ aufweist und die kältere Kühlstufe

eine untere Temperatur $T_{unt}$ aufweist,
wobei jeweils der kontinuierliche Temperaturgradient am weiteren Teilabschnitt des Kaltkopfs eine Temperaturdifferenz $TD_{WKK}$ mit

$$TD_{WKK} \geq (T_{ob} - T_{unt})/2 \text{ überspannt,}$$

und jeweils der kontinuierliche Temperaturgradient am weiteren Teilabschnitt des Adsorberbetts eine Temperaturdifferenz $TD_{WAD}$ mit

$$TD_{WAD} \geq (T_{ob} - T_{unt})/2 \text{ überspannt.}$$

Durch ein weiteres, so eingerichtetes Adsorberbett können Verunreinigungen des durchfließenden Heliumgases, deren Adsorptionstemperaturen unterhalb der Temperatur $T_{ob}$ und oberhalb der Temperatur $T_{unt}$ liegen, nahe oder bei ihrer Adsorptionstemperatur ausgefroren werden, was thermodynamisch effizient ist. Umfasst der Kaltkopf genau zwei Kühlstufen, so ist $T_{ob}$ zugleich $T_w$, und die Temperatur $T_{unt}$ ist zugleich $T_k$.
Weiterhin umfasst die vorliegende Erfindung die Verwendung einer erfindungsgemäßen, oben beschriebenen Vorrichtung in einem erfindungsgemäßen, oben beschriebenen Verfahren. Mit der Vorrichtung können im Rahmen des Verfahrens Verunreinigungen thermodynamisch besonders effizient ausgefroren werden. Insgesamt können daher besonders niedrige Betriebskosten für die Reinigung und Verflüssigung, und insbesondere des Betriebs des Kaltkopfs bzw. des zugehörigen heliumgekühlten Anwendungsgeräts, erreicht werden.
Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebiger Kombination Verwendung finden. Die gezeigten und beschriebenen Ausführungsformen sind nicht als abschließende Aufzählung zu verstehen, sondern haben vielmehr beispielhaften Charakter für die Schilderung der Erfindung.

**Detaillierte Beschreibung der Erfindung und Zeichnung**

Die Erfindung ist in der Zeichnung dargestellt und wird anhand von Ausführungsbeispielen näher erläutert.

Fig. 1  zeigt einen schematische Längsschnitt einer beispielhaften ersten Ausführungsform der erfindungsgemäßen Vorrichtung mit einem vakuumisolierten Speichergefäß mit einem Halsrohr, in welchem ein Kaltkopf und ein Adsorberbett mit drei Adsorbern unmittelbar angeordnet sind;

Fig. 2     zeigt einen schematischen Längsschnitt einer beispielhaften zweiten Ausführungsform der erfindungsgemäßen Vorrichtung ähnlich wie in Fig. 1, wobei das Adsorberbett zwei kontinuierlich thermisch gekoppelte Adsorber umfasst;

Fig. 3     zeigt einen schematischen Querschnitt durch das Halsrohr mit Kaltkopf und Adsorberbett von Fig. 2 in der dortigen Ebene A-A;

Fig. 4     zeigt einen schematische Längsschnitt einer beispielhaften dritten Ausführungsform der erfindungsgemäßen Vorrichtung mit einem vakuumisolierten Speichergefäß mit einem Halsrohr, in welchen ein Kaltkopfbehälter beinhaltend einen Kaltkopf und ein Adsorberbett einragt;

Fig. 5     zeigt einen schematischen Längsschnitt einer beispielhaften vierten Ausführungsform der erfindungsgemäßen Vorrichtung ähnlich wie in Fig. 4, wobei der Kaltkopfbehälter zusätzlich über eine Rückführungs-Kapillare sowie eine Durchführung verfügt;

Fig. 6     zeigt einen schematischen Längsschnitt einer beispielhaften fünften Ausführungsform der erfindungsgemäßen Vorrichtung ähnlich wie in Fig. 5, wobei im Kaltkopfbehälter eine Strömungsleitung an der Durchführung angebracht ist;

Fig. 7     zeigt einen schematischen Längsschnitt einer beispielhaften sechsten Ausführungsform der erfindungsgemäßen Vorrichtung ähnlich wie in Fig. 4, wobei die Vorrichtung zusätzlich über einen Abführungsanschluss verfügt, das vakuumisolierte Speichergefäß zusätzlich ein Speichergefäß-Heizelement beinhaltet und der Kaltkopf zusätzlich eine Spülleitung und eine optische Kontrolleinrichtung enthält;

Fig. 8a    zeigt einen schematischen Längsschnitt eines beispielhaften alternativen Halsrohres des vakuumisolierten Speichergefäßes für die dritte Ausführungsform der erfindungsgemäßen Vorrichtung mit einem Kaltkopfbehälter wie in Fig. 4 dargestellt, wobei das Speichergefäß einen Hauptteil und einen ausfahrbaren Aufsatzteil mit einer flexiblen Wandung umfasst, die durch einen geschlossenen Trennschieber voneinander getrennt sind;

Fig. 8b    zeigt einen schematischen Längsschnitt des Halsrohres von Fig. 8a mit in den Hauptteil eingefahrenem Aufsatzteil und geöffnetem Trennschieber;

Fig. 9     zeigt ein R&I-Fließschema einer beispielhaften Ausführungsform eines erfindungsgemäßen Heliumrückgewinnungssystems, mit einer erfindungsgemäßen Vorrichtung zur Reinigung und Verflüssigung von Helium sowie Anwendungsgeräten und einem Ballonspeicher.

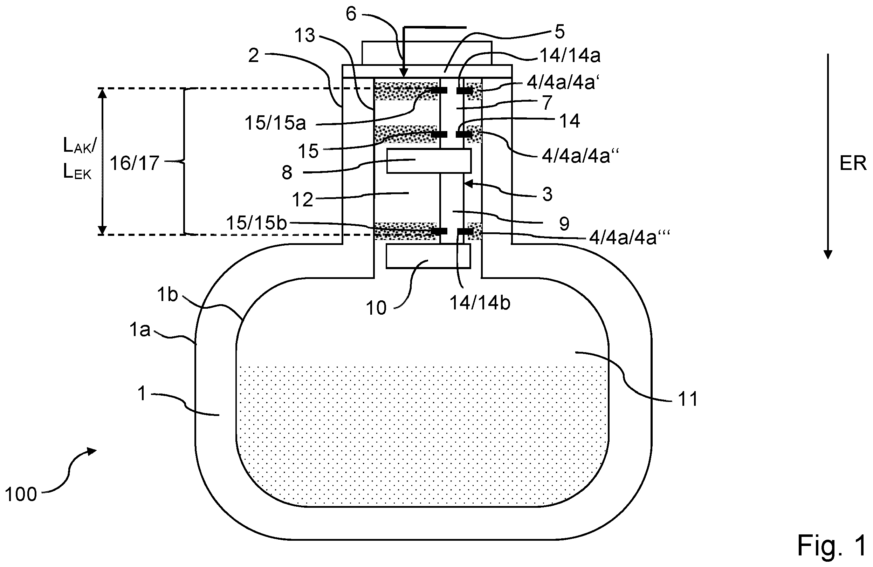

Die **Fig. 1** zeigt einen schematischen Längsschnitt einer beispielhaften ersten Ausführungsform einer erfindungsgemäßen Vorrichtung **100** zur Reinigung und Verflüssigung von Helium. Die Vorrichtung 100 umfasst ein vakuumisoliertes Speichergefäß **1** mit einem vertikal ausgerichteten Halsrohr **2** sowie einen Kaltkopf **3** und ein Adsorberbett **4**.

Der Kaltkopf 3 besitzt einen raumtemperaturwarmen, hinteren Endabschnitt **5,** der über einen Einspeisungsanschluss **6** für zu reinigendes Helium verfügt. Der raumtemperaturwarme Endabschnitt 5 ist über einen Regenerator **7** mit einer hintersten, im Betrieb wärmsten Kühlstufe **8** (die hier bei $T_w$ von ca. 70 K betrieben wird) verbunden, und die wärmste Kühlstufe 8 ist über einen weiteren Regenerator **9** mit einer vordersten, im Betrieb kältesten Kühlstufe **10** verbunden. In der gezeigten Ausführungsform hat der Kaltkopf 3 also zwei Kühlstufen 8, 10. Über die kälteste Kühlstufe 10 kann eine Temperatur $T_k$ zur Verfügung gestellt werden, mit der Helium verflüssigt werden kann. In der gezeigten Ausführungsform hat die kälteste Kaltstufe 10 eine Temperatur $T_k$ von ca. 4,2 K, so dass Heliumgas unter Normaldruck (ca. 1 bar) verflüssigt werden kann. Der Endabschnitt 5, die Kühlstufe 8 und die Kühlstufe 10 sind entlang einer Erstreckungsrichtung **ER** des Kaltkopfs 3 aufeinander folgend angeordnet. In der gezeigten Ausführungsform haben die beiden Regeneratoren 7, 9 einen gleichen radialen Durchmesser, und die beiden Kühlstufen 8 und 10 haben einen gleichen radialen Durchmesser (jeweils quer zu ER). Alternativ können der Regenerator 7 und die wärmste Kühlstufe 8 so ausgebildet sein, dass sie jeweils größere Durchmesser aufweisen (z. B. doppelt so groß) als der weitere Regenerator 9 und die kälteste Kühlstufe 10 (nicht dargestellt). Der Kaltkopf 3 kann beispielsweise Teil eines Pulsrohr-Krykühlers oder eines Gifford-McMahon Kryokühlers sein.

Der Kaltkopf 3 und das Adsorberbett 4 sind unmittelbar in das Halsrohr 2 des vakuumisolierten Speichergefäßes 1 versenkt. Durch den raumtemperaturwarmen, hinteren Endabschnitt 5 des Kaltkopfs 3, der auf dem Halsrohr 2 des vakuumisolierten Speichergefäßes 1 aufliegt, wird ein Innenraum **11** des vakuumisolierten Speichergefäßes 1 verschlossen. In der gezeigten Ausführungsform begrenzt eine Innenwand **13** des Halsrohrs 2 lateral einen Gasraum **12,** der entlang der Erstreckungsrichtung ER des Kaltkopfs 3 führt, wobei der Kaltkopf 3 mit den Kühlstufen 8, 10 und den Regeneratoren 7, 9 in den Gasraum 12 hineinragt und das Adsorberbett 4 ebenfalls im Gasraum 12 angeordnet ist. Der Gasraum 12 ist nach unten in Richtung des weiteren Innenraums 11 des vakuumisolierten Speichergefäßes 1 offen.

Im vakuumisolierten Speichergefäß 1 kann verflüssigtes Helium gespeichert werden (gepunkteter Bereich). Das vakuumisolierte Speichergefäß 1 verfügt über eine äußere Wand **1a** und eine innere Wand **1b,** zwischen denen zur thermischen Isolation ein Vakuum herrscht. Das vakuumisolierte Speichergefäß 1 kann einen Füllstandsensor für flüssiges Helium beinhalten (nicht dargestellt), mit dem sich beispielsweise der Zeitpunkt bestimmen lässt, an dem im vakuumisolierten Speichergefäß 1 der maximale Füllstand erreicht worden ist und das verflüssigte Helium genutzt werden kann. Aus Vereinfachungsgründen nicht gezeigt sind zudem Anschlüsse (Ports), um das verflüssigte Helium aus dem vakuumisolierten Speichergefäß 1 zu entnehmen oder um gasförmiges Helium aus dem vakuumisolierten Speichergefäß 1 abströmen zu lassen, falls sich in kurzer Zeit viel gasförmiges Helium bildet.

Das Adsorberbett 4 ist thermisch mit dem Kaltkopf 3 gekoppelt. Das Adsorberbett 4 umfasst in der gezeigten Ausführungsform drei einzelne Adsorber **4a.** Die thermische Kopplung erfolgt hier vor allem über einen Festkörperkontakt mittels Wärmekontaktelementen; die Adsorber 4a sind dabei einzeln an den Kaltkopf 3 angebunden. Man beachte, dass eine thermische Kopplung auch ohne einen Festkörperkontakt (also über einen Spalt) über Konvektion und Wärmestrahlung erfolgen kann. In der hier gezeigten Ausführungsform liegen am Kaltkopf 3 drei Auskopplungsorte **14** (zwei davon am Regenerator 7, einer davon am Regenerator 9) und am Adsorberbett 4 drei Einkopplungorte **15** (jeweils einer je Adsorber 4a) vor, die jeweils über ein Wärmekontaktelement miteinander verbunden sind und somit den Kaltkopf 3 und das Adsorberbett 4 thermisch koppeln.

Die Auskopplungsorte 14 am Kaltkopf 3 verteilen sich über einen Auskopplungsbereich **16,** der sich über eine Länge $L_{AK}$ in der Erstreckungsrichtung ER des Kaltkopfs 3 erstreckt. Die beiden bezüglich der Erstreckungsrichtung ER äußeren Auskopplungsorte **14a, 14b** bilden die Endpunkte des Auskopplungsbereichs 16. Weiterhin verteilen sich die Einkopplungsorte 15 am Adsorberbett 4 über einen Einkopplungsbereich **17,** der sich über eine Länge $L_{EK}$ in der Erstreckungsrichtung ER des Kaltkopfs 3 erstreckt. Die beiden bezüglich der Erstreckungsrichtung ER äußeren Einkopplungsorte **15a, 15b** bilden die Endpunkte des Einkopplungsbereichs 17. In der gezeigten Ausführungsform sind die Längen $L_{AK}$ und $L_{EK}$ gleich.

Die Temperatur im Kaltkopf 3 nimmt in Erstreckungsrichtung ER vom raumtemperaturwarmen Endabschnitt 5 zur kältesten Kühlstufe 10 ab. Dadurch können, je nachdem wo sich die Auskopplungsorte 14 am Kaltkopf 3 befinden, jeweils unterschiedliche Temperaturen über die Einkopplungsorte 15 in das Adsorberbett 4 eingekoppelt werden. Das Adsorberbett 4 umfasst in der gezeigten Ausführungsform die drei einzelnen Adsorber 4a. Diese Adsorber 4a werden auf jeweils unterschiedliche Temperaturen gekühlt, wodurch Verunreinigungen verschiedener Arten eines durch den Gasraum 12 geleiteten, zu reinigenden Heliumgases bereits bei oder nahe bei ihrer Adsorptionstemperatur in den unterschiedlichen Adsorbern 4a ausgefroren werden können. Hierdurch kann die thermodynamische Effizienz der Vorrichtung gesteigert werden, da die Adsorptionswärmen der Verunreinigungen bereits an oder nahe bei ihren Adsorptionstemperaturen vom Kaltkopf 3 aufgenommen werden können. Man beachte, dass die Adsorptionstemperaturen von Verunreinigungen meist nicht allzu weit von ihren jeweiligen Gefrierpunkten entfernt sind. Meist liegen die Adsorptionstemperaturen von Verunreinigungen bis zu 20K über ihrem jeweiligen Gefrierpunkt. In der hier gezeigten Ausführungsform weist ein wärmster (oberster) Adsorber **4a'** eine (näherungsweise einheitliche) Temperatur von ca. -20°C (253K) auf, bei der sich Wasser (Gefrierpunkt 0°C/273K) recht effizient ausfrieren lässt. Der nächst kältere (mittlere) Adsorber **4a"** weist hier eine (näherungsweise einheitliche) Temperatur von ca. - 150°C (123K) auf, bei der sich langkettige Kohlenwasserstoffe (Gefrierpunkte z.B. von Pentan bei -129°C/144K) effizient ausfrieren lassen. Der kälteste (unterste) Adsorber **4a'''** hat hier eine (näherungsweise einheitliche) Temperatur von ca. -253°C (20K), bei der sich auch Sauerstoff (Gefrierpunkt -218°C/55K) und Stickstoff (-210°C/63K) ausfrieren lassen. Die Temperaturen der Adsorber 4a', 4a", 4a''' entsprechen im Wesentlichen den Temperaturen an den zugehörigen Auskopplungsorten am Kaltkopf 3.

Die Reinigung und Verflüssigung von Helium kann mit der hier gezeigten Vorrichtung 100 wie im Folgenden dargestellt ablaufen:

Über den Einspeisungsanschluss 6 wird ein Gasstrom zu reinigenden Heliums in den Gasraum 12 geleitet. Der Gasstrom fließt, geführt durch das Halsrohr 2, entlang der Erstreckungsrichtung ER des gekühlten Kaltkopfs 3 vom raumtemperaturwarmen Endabschnitt 5 entlang des Regenerators 7 zum wärmsten (oberen) Adsorber 4a'. Beim Durchfließen des wärmsten Adsorbers 4a', der eine Temperatur von ca. -20°C (253K) aufweist, werden die ersten Verunreinigungen aus dem Gasstrom ausgefroren, welche eine Adsorptionstemperatur von -20°C oder höher aufweisen, wie z. B. Wasser. Der teilweise gereinigte Gasstrom fließt weiter entlang des Regenerators 7 zum nächst kälteren (mittleren) Adsorber 4a". Beim Durchfließen des kälteren Adsorbers 4a", der eine Temperatur von ca. -150°C (123K) aufweist, werden die nächsten Verunreinigungen aus dem Gasstrom ausgefroren, die eine Adsorptionstemperatur zwischen -20°C und -150°C aufweisen, wie z. B. langkettige Kohlenwasserstoffe. Der von diesen Verunreinigungen gereinigte Gasstrom fließt weiter entlang des Regenerators 7 zur wärmsten Kühlstufe 8 und von dort entlang des Regenerators 9 zum kältesten (unteren) Adsorber 4a'''. Beim Durchfließen des kältesten Adsorbers 4a''', der eine Temperatur von ca. -253°C (20K) aufweist, werden weitere Verunreinigen aus dem Gasstrom ausgefroren, die eine Adsorptionstemperatur zwischen -150°C und -253°C aufweisen, wie z. B. Stickstoff oder Sauerstoff. Das solchermaßen gereinigte, gasförmige Helium fließt dann weiter entlang des Regenerators 9 zu kältesten Kühlstufe 10 und wird dort bei 4,2K verflüssigt. Das flüssige Helium kann dann in den unteren Teil des vakuumisolierten Speicherbehälters 1 abtropfen.

Im Rahmen der Erfindung ist an der Vorrichtung 100 eine thermische Kopplung vom Kaltkopf 3 zum Adsorberbett 4 über zumindest zwei Auskopplungsorte 14 und zwei Einkopplungsorte 15 eingerichtet. Hierdurch können zumindest zwei unterschiedliche Temperaturen zur Kühlung des Adsorberbett 4 genutzt werden. In der gezeigten Ausführungsform von Fig. 1 sind drei Auskopplungsorte 14 und Einkopplungsorte 15 eingerichtet; es können jedoch auch noch mehr Auskopplungsorte 14 und Einkopplungsorte 15 eingerichtet werden. Die Längen $L_{AK}$ und $L_{EK}$ betragen in der gezeigten Ausführungsform jeweils ca. 25 cm, wodurch deutlich unterschiedliche Temperaturen zur Kühlung des Adsorberbetts 4 bzw. zum Ausfrieren von Verunreinigungen des zu reinigenden Heliumgases thermodynamisch effizient genutzt werden können. Eine Auskopplungs-Temperaturdifferenz am Kaltkopf 3, die sich aus der Differenz der Temperaturen des dem raumtemperaturwarmen Endabschnitts 5 am nächsten liegenden Auskopplungsort 14a, hier bei ca. -20°C (253K), und des der kältesten Kühlstufe 10 am nächsten liegenden Auskopplungsort 14b, hier bei ca. -253°C (20K), ergeben, beträgt ca. 233K. Die Temperatur des Einkopplungsortes 15a entspricht im Wesentlichen der Temperatur des Auskopplungsortes 14a, und die Temperatur des Einkopplungsortes 15b entspricht im Wesentlichen der Temperatur des Auskopplungsortes 14b. Eine Einkopplungs-Temperaturdifferenz am Adsorberbett 4 beträgt dann ebenfalls ca. 233K.

Das Material für das Adsorberbett 4 sollte eine große, innere Oberfläche von wenigstens 300m²/g, bevorzugt wenigstens 900 m²/g, aufweisen. Die große Oberfläche ermöglicht eine größere Beladung, wodurch das Adsorberbett 4 seltener regeneriert werden muss; zudem können Verunreinigungen besonders einfach ausgefroren werden. Als Material für das Adsorberbett 4 kann beispielsweise eine Aktivkohleschüttung verwendet werden, die in einem Netz oder einem Käfig angeordnet ist.

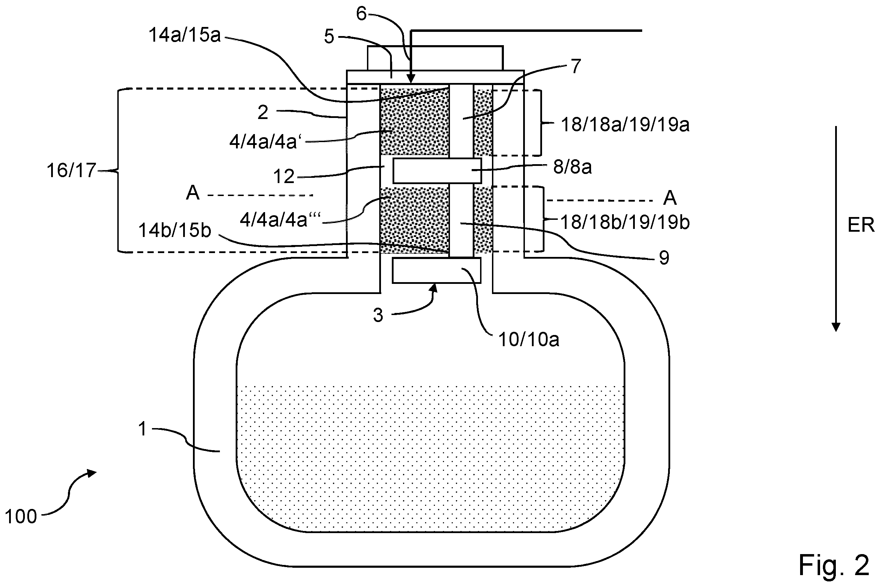

In **Fig. 2** ist ein schematischer Längsschnitt einer zweiten beispielhaften Ausführungsform der erfindungsgemäßen Vorrichtung 100 ähnlich wie in Fig. 1 gezeigt; es werden nur die wesentlichen Unterschiede erläutert (gilt auch für die weiteren Ausführungsformen weiter unten). Die Vorrichtung 100 umfasst hier ein vakuumisoliertes Speichergefäß 1 mit einem Halsrohr 2, in welches der Kaltkopf 3 einragt; der Kaltkopf 3 und das Adsorberbett 4 sind unmittelbar im Halsrohr 2 angeordnet.

Das Adsorberbett 4 ist in der gezeigten Ausführungsform aus zwei separaten Adsorbern 4a aufgebaut. Die thermische Kopplung des Adsorberbetts 4 mit dem Kaltkopf 3 erfolgt in der hier gezeigten Ausführungsform vor allem über einen direkten Festkörperkontakt der Adsorber 4a mit dem Kaltkopf 3. Der Kaltkopf 3 weist zwei Teilabschnitte **18** auf, und das Adsorberbett 4 weist zwei Teilabschnitte **19** auf, über welche in Erstreckungsrichtung ER des Kaltkopfs 3 eine kontinuierliche thermische Kopplung zwischen dem Kaltkopf 3 und dem Adsorberbett 4 eingerichtet ist.

Die Teilabschnitte 18, 19 erstrecken sich über einen Großteil (bevorzugt 80% oder mehr) der Länge der Regeneratoren 7, 9 in Erstreckungsrichtung ER; in der gezeigten Ausführungsform erstrecken sich die Teilabschnitte 18, 19 über jeweils ca. 10 cm. Durch die kontinuierlich eingerichtete thermische Kopplung kann im jeweiligen Teilabschnitt 19 im Adsorberbett 4 ein Temperaturgradient eingerichtet werden, in welchem alle Temperaturen des überspannten Temperaturbereichs vorkommen. Verunreinigungen eines zu reinigenden Gasstroms von Heliumgas können dadurch im Adsorberbett 4 bei der Adsorptionstemperatur ausfrieren, soweit die Adsorptionstemperatur im überspannten Temperaturbereich liegt. Die Kühlleistung des Kaltkopfs 3 wird auf diese Weise besonders effizient an das Adsorberbett 4 weitergegeben.

In der gezeigten Ausführungsform weist das Adsorberbett 4 zwei entlang der Erstreckungsrichtung ER hintereinander angeordnete, separate Adsorber 4a', 4a''' auf, denen die Teilabschnitte **19a, 19b** zugeordnet werden können. Am Kaltkopf 3 sind als Teilabschnitte 18 die Teilabschnitte **18a, 18b** in Erstreckungsrichtung ER hintereinander eingerichtet.

Der hintere Teilabschnitt 18a erstreckt sich dabei zwischen dem raumtemperaturwarmen Endabschnitt 5 und der wärmsten Kühlstufe 8 und ist thermisch kontinuierlich mit dem hinteren Teilabschnitt 19a des Adsorberbetts 4 gekoppelt. Die wärmste Kühlstufe 8 weist hier eine Temperatur $T_w$ von ca. 70K auf. Der hintere Teilabschnitt 18a des Kaltkopfs 3 übergreift hier einen Temperaturbereich von ca. -10°C/263K bis ca. -173°C/100K. Eine Temperaturdifferenz $TD_{HKK}$ des hinteren Teilabschnitts 18a des Kaltkopfs 3 in Erstreckungsrichtung ER des Kaltkopfs 3 beträgt dann 163K. Ein Temperaturbereich des hinteren Teilabschnitts 19a des Adsorberbetts 4 und eine Temperaturdifferenz $TD_{HAD}$ des hinteren Teilabschnitts 19a des Adsorberbetts 4 in Erstreckungsrichtung ER des Kaltkopfs 3 entsprechen im Wesentlichen dem Temperaturbereich und der Temperaturdifferenz $TD_{HKK}$ des hinteren Teilabschnitts 18a des Kaltkopfs 3.

Der weitere Teilabschnitt 18b erstreckt sich zwischen einer wärmeren Kühlstufe **8a**, die hier der wärmsten Kühlstufe 8 entspricht, und einer kälteren Kühlstufe **10a**, die hier der kältesten Kühlstufe 10 entspricht. Der weitere Teilabschnitt 18b ist thermisch kontinuierlich mit dem weiteren Teilabschnitt 19b des Adsorberbetts 4 gekoppelt. Im hier gezeigten Fall ist der weitere Teilabschnitt 19b zugleich der hinterste Teilabschnitt.

Die wärmere Kühlstufe 8a weist hier eine Temperatur $T_{ob}$ von 70 K auf (man beachte, dass $T_{ob}$ hier gleich $T_w$ ist) und die kältere Kühlstufe 10a weist hier eine Temperatur $T_{unt}$ von ca. 4K auf (man beachte, dass $T_{unt}$ hier gleich $T_k$ ist). Der weitere Teilabschnitt 18b des Kaltkopfs 3 übergreift hier einen Temperaturbereich von ca. -213°C/60K bis ca. -263°C/10K. Eine Temperaturdifferenz $TD_{wKK}$ des weiteren Teilabschnitts 18b des Kaltkopfs 3 in Erstreckungsrichtung ER des Kaltkopfs 3 beträgt dann 50K. Ein Temperaturbereich des weiteren Teilabschnitts 19b des Adsorberbetts 4 und eine Temperaturdifferenz $TD_{WAD}$ des weiteren Teilabschnitts 19b des Adsorberbetts 4 in Erstreckungsrichtung ER des Kaltkopfs 3 entsprechen im Wesentlichen dem Temperaturbereich und der Temperaturdifferenz $TD_{WKK}$ des hinteren Teilabschnitts 18b des Kaltkopfs 3.

Die jeweiligen Teilabschnitte 18 des Kaltkopfs 3 in Erstreckungsrichtung ER des Kaltkopfs 3 weisen also Temperaturgradienten mit Temperaturdifferenzen $TD_{TKK}$ von 163 K bzw. 50 K auf, und die jeweiligen Teilabschnitte 19 des Adsorberbetts 4 in Erstreckungsrichtung ER des Kaltkopfs 3 weisen Temperaturgradienten mit Temperaturdifferenzen $TD_{TAD}$ von 163 K bzw. 50 K auf.

Die Reinigung und Verflüssigung von Helium kann mit der hier gezeigten Vorrichtung 100 wie im Folgenden dargestellt ablaufen:

Über den Einspeisungsanschluss 6 wird ein Gasstrom zu reinigenden Heliums in den Gasraum 12 geleitet. Der Gasstrom fließt, geführt durch das Halsrohr 2, entlang der Erstreckungsrichtung ER des gekühlten Kaltkopfs 3 vom raumtemperaturwarmen Endabschnitt 5 entlang des Regenerators 7 zum wärmsten (oberen) Adsorber 4a'. Der Gasstrom durchfließt den wärmsten Adsorber 4a', der einen Temperaturbereich von ca. -10°C/263K bis ca. -173°C/100K übergreift. An einem oberen Teil des Adsorbers 4a' werden Verunreinigungen mit einer Adsorptionstemperatur größer oder gleich -10°C ausgefroren, und weitere Verunreinigungen mit einer Adsorptionstemperatur zwischen -10°C und -173°C werden an einer entsprechenden Stelle im Adsorber 4a' ausgefroren. Die im Gasstrom enthaltenen Verunreinigungen werden insoweit nahe ihrer Adsorptionstemperatur oder bei ihrer Adsorptionstemperatur ausgefroren. Beispielsweise wird Wasser bei -10°C/263K, und somit einer nur geringfügig niedrigeren Temperatur als für Wasser notwendig (vgl. Gefrierpunkt von Wasser 0°C/273K), ausgefroren. Pentan (als Beispiel für einen langkettigen Kohlenwasserstoff) wird im Adsorber 4a' bei seiner Adsorptionstemperatur (vgl. Gefrierpunkt von Pentan -129°C/144K) ausgefroren, da die Adsorptionstemperatur im Temperaturbereich des Adsorbers 4a' abgedeckt wird. Der teilweise gereinigte Gasstrom fließt weiter entlang des Regenerators 7 zur wärmsten Kühlstufe 8 und von dort entlang des Regenerators 9 zum kältesten Adsorber 4a‴, der einen Temperaturbereich von ca. -213°C/60K bis ca. -263°C/10K übergreift. An einem oberen Teil des Adsorbers 4a‴ werden Verunreinigungen mit einer Adsorptionstemperatur zwischen -173°C und -213°C ausgefroren, und weitere Verunreinigungen mit einer Adsorptionstemperatur zwischen -213°C und -263°C werden an einer entsprechenden Stelle im Adsorber 4a' ausgefroren. Die verbliebenen, im Gasstrom enthaltenen Verunreinigungen werden also wieder nahe ihrer Adsorptionstemperatur oder bei ihrer Adsorptionstemperatur ausgefroren. Beispielsweise wird Stickstoff bei -213°C/60K, und somit einer nur leicht niedrigeren Temperatur als für Stickstoff notwendig (vgl. Gefrierpunkt Stickstoff -210°C/63K), ausgefroren. Sauerstoff wird in Adsorber 4a‴ bei seiner Adsorptionstemperatur (vgl. Gefrierpunkt von Sauerstoff -218°C/55K) ausgefroren, da die Adsorptionstemperatur im Temperaturbereich des Adsorbers 4a‴ abgedeckt wird. Das solchermaßen gereinigte, gasförmige Helium fließt dann entlang des Regenerators 9 zu kältesten Kühlstufe 10 und wird dort bei 4,2K verflüssigt. Das flüssige Helium kann dann in den unteren Teil des vakuumisolierten Speicherbehälters 1 abtropfen.

Eine Auskopplungs-Temperaturdifferenz am Kaltkopf 3, die sich in der Fig. 2 aus der Differenz der Temperaturen des dem raumtemperaturwarmen Endabschnitts 5 am nächsten liegenden Auskopplungsort 14a, hier bei ca. -10°C (263K), und des der kältesten Kühlstufe 10 am nächsten liegenden Auskopplungsort 14b, hier bei ca. -263°C (10K), ergeben, beträgt ca. 253K. Die Temperatur des Einkopplungsortes 15a entspricht im Wesentlichen der Temperatur des Auskopplungsortes 14a, und die Temperatur des Einkopplungsortes 15b entspricht im Wesentlichen der Temperatur des Auskopplungsortes 14b. Eine Einkopplungs-Temperaturdifferenz am Adsorberbett 4 beträgt dann ebenfalls ca. 253K.

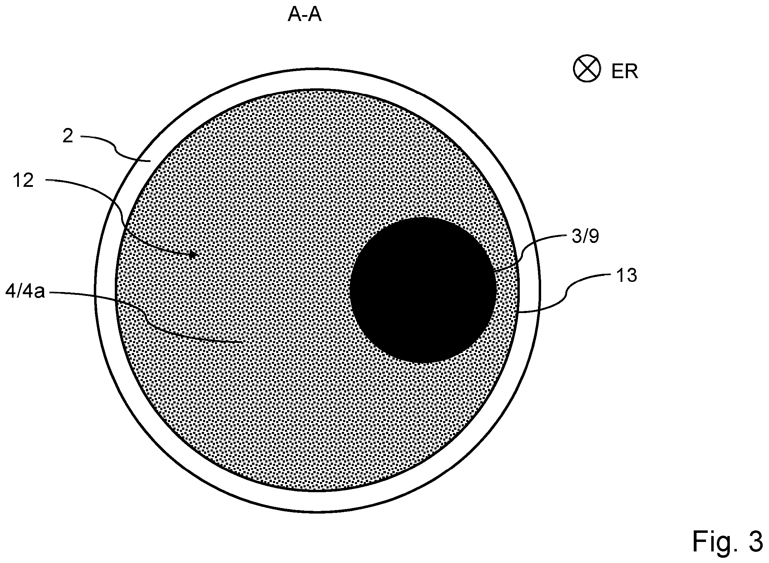

Fig. 3 zeigt einen schematischen Querschnitt durch das Halsrohr 2 von Fig. 2 in der dortigen Ebene A-A. Das doppelwandige, vakuumisolierte Halsrohr 2 ist kreisförmig ausgebildet und umgreift das Adsorberbett 4 und den Kaltkopf 3. Die Erstreckungsrichtung ER des Kaltkopfs 3 zeigt in die Zeichenebene hinein.

Der Adsorber 4a des Adsorberbetts 4 steht in direktem Kontakt zur Innenwand 13 des Halsrohres 2 und zum Kaltkopf 3, hier im Bereich des Regenerators 9, und nimmt einen lokalen Anteil ANT des für das Helium zur Verfügung stehenden Querschnitts des Gasraums 12 (senkrecht zur Erstreckungsrichtung ER des Kaltkopfs 3) von hier 100% ein. Der von der Innenwand 13 des Halsrohrs 2 begrenzte Querschnitt des Gasraums 12, soweit er nicht durch den Kaltkopf 3 belegt ist, wird komplett vom Adsorberbett 4 ausgefüllt, insbesondere bleibt weder an der Innenwand 13 noch an der (lokalen) Außenwand des Kaltkopfs 3 ein merklicher Spalt, durch den Heliumgas entlang der Erstreckungsrichtung ER ohne Reinigung durch das Adsorberbett 4 propagieren könnte. Dadurch wird der Gasstrom von zu reinigendem Heliumgas komplett der Reinigung durch das Adsorberbett 4 unterzogen.

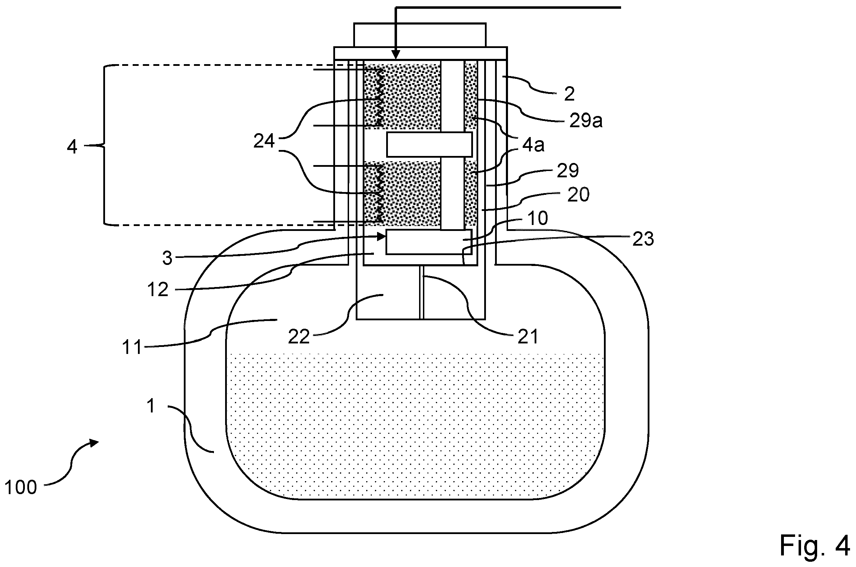

In Fig. 4 ist ein schematischer Längsschnitt einer beispielhaften dritten Ausführungsform einer erfindungsgemäßen Vorrichtung 100 gezeigt. Der Kaltkopf 3 und das Adsorberbett 4 sind ähnlich aufgebaut wie in Fig. 2 und sind in einem Kaltkopfbehälter **20** angeordnet.

Der Kaltkopf 3 und das Adsorberbett 4 ragen in den Kaltkopfbehälter 20 hinein. Der Kaltkopfbehälter 20 ragt wiederum in das Halsrohr 2 des vakuumisolierten Speichergefäßes 1 hinein. Durch den Kaltkopfbehälter 20 und den Kaltkopf 3 wird der Gasraum 12 begrenzt, in welchem das zu reinigende Heliumgas geführt wird. Der Kaltkopfbehälter 20 begrenzt den Gasraum 12 in der hier gezeigten Ausführungsform zum Innenraum 11 des vakuumisolierten Speichergefäßes 1. Der Gasraum 12 und der Innenraum 11 sind hier lediglich über eine Ablauf-Kapillare **21** verbunden, über die an der untersten Kühlstufe 10 am Kaltkopf 3 verflüssigtes Helium in das vakuumisolierte Speichergefäß 1 abläuft. Die hier vertikal ausgeformte Ablauf-Kapillare 21 ist in einer unterseitigen Gefäßwand **22** des Kaltkopfbehälters 20 ausgebildet und mündet an einem hier eben horizontal ausgebildeten, inneren Boden **23** des Kaltkopfbehälters 20 in den Gasraum 12. Falls alternativ der innere Boden 23 nicht eben horizontal ausgebildet ist, mündet die Ablauf-Kapillare 21 bevorzugt am untersten Punkt des Gasraums 12 des Kaltkopfbehälters 20, um eine Ansammlung von flüssigem Helium im Kaltkopfbehälter 20 zu vermeiden (nicht näher dargestellt). In der gezeigten Ausführungsform ist die Ablauf-Kapillare 21 gerade ausgebildet und vertikal ausgerichtet.

Wird während einer Phase der Regeneration des Kaltkopfs 3 und des Adsorberbetts 4 der Kaltkopf 3 erwärmt, so begrenzt der Kaltkopfbehälter 20 den Wärmeeintrag in das vakuumisolierte Speichergefäß 1. Der Kaltkopfbehälter 20 ist in der hier gezeigten Ausführungsform 100 vakuumisoliert ausgebildet, wodurch eine besonders gute thermische Isolation des Gasraums 12 des Kaltkopfbehälters 20 vom Innenraum 11 des vakuumisolierten Speichergefäßes 1 erreicht wird. Entsprechend verfügt der Kaltkopfbehälter 20 über eine Außenwand **29** und eine Innenwand **29a,** zwischen denen ein Vakuum eingerichtet ist. Alternativ ist es möglich, dass der Kaltkopfbehälter 20 einwandig ohne eine Vakuumisolation ausgebildet ist, womit der Platzbedarf des Kaltkopfbehälters 20 reduziert werden kann (hier nicht gezeigt). Alternativ kann der Kaltkopfbehälter 20 auch auf andere Weise isoliert werden, z.B. mit geschäumten Materialien, die Konvektion begrenzen.

Durch die Ablauf-Kapillare 21 kommt es allenfalls zu einem geringen Wärmeeintrag vom Kaltkopfbehälter 20 in das vakuumisolierte Speichergefäß 1 während einer Phase der Regeneration.

Das Adsorberbett 4 verfügt über zwei Adsorber-Heizelemente **24,** die genutzt werden können, um bei der Regeneration des Adsorberbetts 4 die Adsorber 4a zu beheizen und so die Verunreinigungen vom Adsorberbett 4 effizient zu desorbieren.

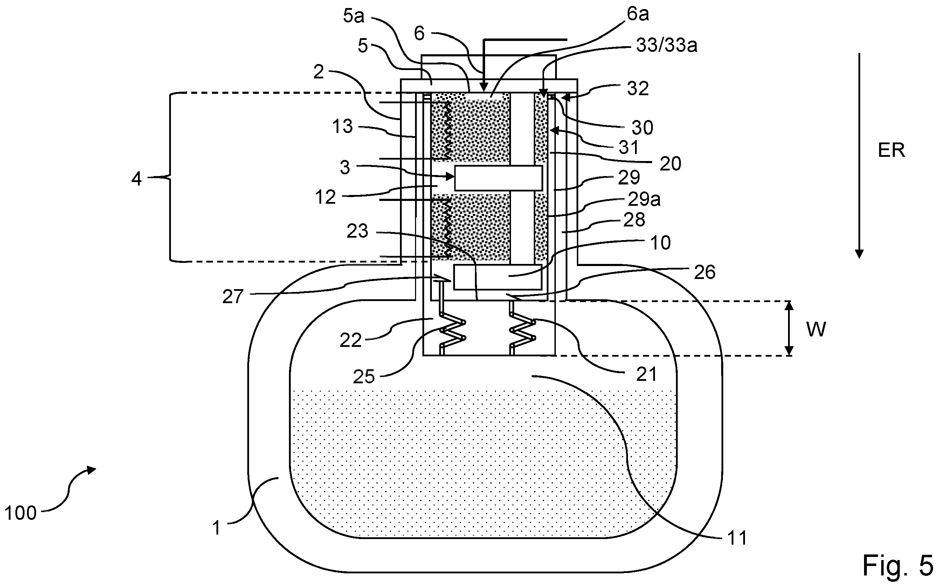

Die **Fig. 5** zeigt einen schematischen Längsschnitt einer beispielhaften vierten Ausführungsform einer erfindungsgemäßen Vorrichtung 100 ähnlich wie in Fig. 4.

Der Gasraum 12 und der Innenraum 11 sind hier über die Ablauf-Kapillare 21 verbunden, über die am Kaltkopf 3 verflüssigtes Helium in das vakuumisolierte Speichergefäß 1 abläuft. Weiterhin sind der Gasraum 12 und der Innenraum 11 über eine Rückführungs-Kapillare **25** verbunden, durch die verdampftes Helium aus dem vakuumisolierten Speichergefäß 1 in den Kaltkopfbehälter 20 zum Kaltkopf 3 nahe der kältesten Kaltstufe 10 geleitet wird, um dort sogleich wieder verflüssigt zu werden.

Die hier spiralförmig ausgeformte Ablauf-Kapillare 21 ist in der unterseitigen Gefäßwand 22 des Kaltkopfbehälters 20 ausgebildet und mündet an dem inneren Boden 23 des Kaltkopfbehälters 20 in den Gasraum 12. Die ebenfalls spiralförmig ausgebildete Rückführungs-Kapillare 25 ist in der unterseitigen Gefäßwand 22 des Kaltkopfbehälters 20 ausgebildet und mündet oberhalb des inneren Bodens 23 des Kaltkopfbehälters 20 in den Gasraum 12 nahe der kältesten Kühlstufe 10 des Kaltkopfs 3.

Durch die spiralförmige Ausführung von Ablauf-Kapillare 21 und Rückführungs-Kapillare 25 kann die Länge der Kapillaren 21, 25 (entlang von deren gewundenen Verläufen) gegenüber einer Wandstärke **W** der unterseitigen Gefäßwand 22 verlängert werden. In der gezeigten Ausführungsform beträgt eine Länge $L_{AKap}$ der Ablauf-Kapillare 21 in der unterseitigen Gefäßwand 22 ungefähr 12 cm und eine Länge $L_{RKap}$ der Rückführungs-Kapillare 25 in der unterseitigen Gefäßwand 22 auch ungefähr 12 cm. Die unterseitige Gefäßwand 22 hat hier eine Wandstärke W von ca. 6 cm. Man beachte, dass $L_{AKap} \geq 2*W$ und $L_{RKap} \geq 2*W$ **bevor**zugt sind. Durch die spiralförmig ausgebildete Ablauf-Kapillare 21 und die spiralförmig ausgebildete Rückführungs-Kapillare 25 wird der Wärmeeintrag vom Kaltkopfbehälter 20 auf das vakuumisolierte Speichergefäß 1 durch den längeren Weg, insbesondere in einer Phase der Regeneration des Kaltkopfs 3 und des Adsorberbetts 4, gering gehalten und die thermische Isolation verbessert.

Um den Wärmeeintrag durch einen konvektiven Wärmetransport über die Kapillaren 21, 25 während einer Phase der Regeneration noch weiter zu verringern, kann die Ablauf-Kapillare 21 mit einem verschließbaren Ventil **26** verschlossen werden. Weiterhin kann die Rückführungs-Kapillare 25 mit einem verschließbaren Ventil **27** verschlossen werden.

Zwischen dem Kaltkopfbehälter 20 und dem Halsrohr 2 des vakuumisolierten Speichergefäßes 1 ist ein ringförmiger Spaltraum **28** eingerichtet. Der ringförmige Spaltraum 28 wird dabei durch die Innenwand 13 des Halsrohres 2 des vakuumisolierten Speichergefäßes 1 und der Außenwand 29 des Kaltkopfbehälters 20 begrenzt. Weiterhin verfügt der Kaltkopfbehälter 20 über mehrere Durchführungen **30**; diese Durchführungen 30 befinden sich nahe des raumtemperaturwarmen Endabschnitts 5 an einem oberen Ende (Endbereich) **31** des Kaltkopfbehälters 20, und führen von einem oberen Bereich **32** des ringförmigen Spaltraums 28 in einen oberen Bereich **33** des Kaltkopfbehälters 20. Damit kann gasförmiges Helium entlang des ringförmigen Spaltraums 28 an der Innenwand 13 des Halsrohrs 2 aufsteigen und dadurch das Halsrohr 2 kühlen, und sodann in den Kaltkopfbehälter 20 zur Verflüssigung geleitet werden, entsprechend einer ringförmigen Konvektion. Die mehreren Durchführungen 30 sind in Umfangsrichtung verteilt angeordnet; in der Fig. 5 sind in der Schnittdarstellung zwei der Durchführungen 30 sichtbar.

Der Einspeisungsanschluss 6 für neu zugeführtes, zu reinigendes Heliumgas ist mittig im raumtemperaturwarmen Endabschnitt 5 des Kaltkopfs 3 angebracht. Das Adsorberbett 4 ist so ausgebildet, dass es einen direkten Kontakt zu einer inneren Wand **5a** des raumtemperaturseitigen Endabschnitts 5 aufweist, wobei ein Einspeisungsraum **6a** nach dem Einspeisungsanschluss 6 im Kaltkopf 20 eingerichtet ist, welcher kein Adsorberbett 4 beinhaltet. Der Einspeisungsraum 6a erstreckt sich hier ca. 1 cm in Erstreckungsrichtung ER des Kaltkopfs 3 und hat eine kreisförmige Fläche mit einem Durchmesser, der etwa 1/3 eines Gesamtdurchmessers des Adsorberbetts 4 im Kaltkopfbehälter 20 entspricht. Ein "Vorbeifließen" des ungereinigten Heliumgases am Adsorberbett 4 (also ein Umgehen des Adsorberbetts) in Richtung der Durchführung 30 oder gar ein direktes Einströmen von neu zugeflossenem, zu reinigendem Heliumgas in den Spaltraum 28 kann so vermieden werden. Außerdem wird hierdurch erreicht, dass sich der Gasstrom zu reinigenden Heliums gleichmäßig im Einspeisungsraum 6a verteilen kann und entsprechend gleichmäßig durch das Adsorberbett 4 geleitet werden kann.

Im oberen Bereich 33 des Kaltkopfbehälters 20 ist nach der Durchführung 30 ein ringförmiger Durchführungsraum **33a** ausgebildet. Der Durchführungsraum 33a wird begrenzt durch das Adsorberbett 4, welches in direktem Kontakt zur inneren Wand 5a und zu einer Innenwand **29a** des Kaltkopfbehälters 20 steht. Der Durchführungsraum 33a erstreckt sich hier ca. 1 cm in Erstreckungsrichtung ER des Kaltkopfs 3 und ca. 1 cm quer zur Erstreckungsrichtung in den Gasraum 12 hinein. Im Durchführungsraum 33a kann sich das reine, aus dem ringförmigen Spaltraum 28 zugeführte Helium verteilen und über den Umfang gleichmäßig in das Adsorberbett 4 geführt werden. Das Adsorberbett 4 verhindert, dass das reine Heliumgas aus dem Spaltraum 28 direkt in den Einspeisungsraum 6a fließen kann.

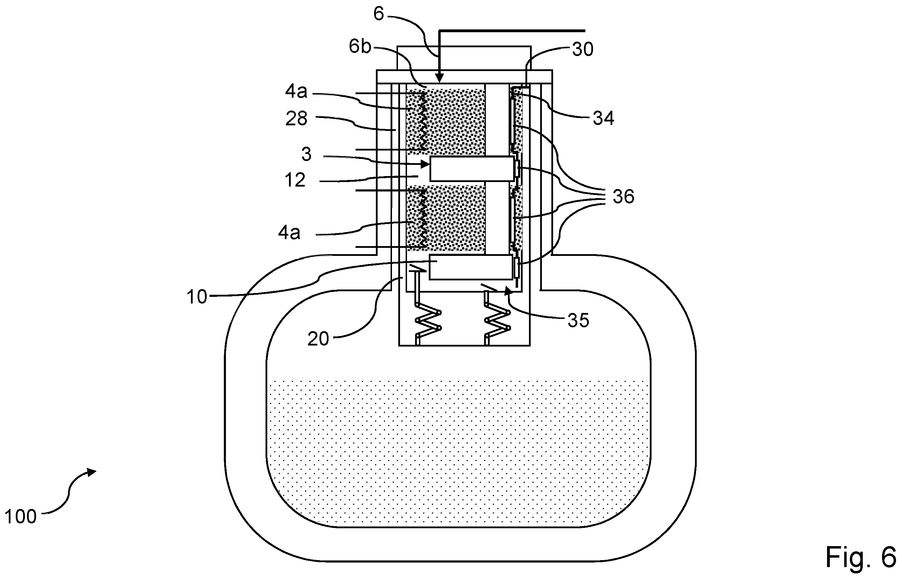

Fig. 6 zeigt einen schematischen Längsschnitt einer beispielhaften fünften Ausführungsform einer erfindungsgemäßen Vorrichtung 100 ähnlich wie in Fig. 5.

Der Kaltkopfbehälter 20 umfasst hier eine Strömungsleitung **34** für verdampftes Helium aus dem ringförmigen Spaltraum 28. Ein erster (oberster) Teil der Strömungsleitung 34 bildet die Durchführung 30 aus, die vom Spaltraum 28 in den Kaltkopfbehälter 20 führt. Eine hier nicht näher gezeigte gelochte Ringleitung kann im Spaltraum 28 angeordnet werden, um Helium gleichmäßig entlang des Umfangs des Spaltraums 28 aufzunehmen und in die Strömungsleitung 34 zu führen. Die Strömungsleitung 34 führt im Kaltkopfbehälter 20 von der Durchführung 30 entlang des Kaltkopfs 3 zur kältesten Kühlstufe 10, und mündet in einem unteren Bereich **35** des Gasraums 12 des Kaltkopfbehälters 20. Durch die Integration der Durchführung 30 in die vom übrigen Gasraum 12 abgetrennte Strömungsleitung 34 wird verhindert, dass ein neu von außen zugeführter Gasstrom von zu reinigendem Helium durch die Durchführung 30 in den ringförmigen Spaltraum 28 fließen kann; ein oberster Teil des Gasraums 12 kann als Freiraum **6b** unter dem Einspeisungsanschluss 6 sich über den vollen inneren Querschnitt des Kaltkopfbehälters 20 erstrecken, wodurch die Einleitung des zu reinigenden Heliumgases in das Adsorberbett gleichmäßig erfolgen kann. Umgekehrt braucht das Helium aus dem ringförmigen Spaltraum 28 nicht über die Adsorber 4a geleitet zu werden, da es sich hierbei bereits um hochreines Helium handelt, welches an der kältesten Kühlstufe 10 des Kaltkopfs 3 direkt verflüssigt werden kann.

Die Strömungsleitung 34 ist, um eine gute thermische Effizienz bei der Rückführung des reinen Heliums aus dem ringförmigen Spaltraum 28 zu erzielen, mit Wärmetauschern **36** ausgestattet, die thermisch an den Kaltkopf 3 gekoppelt sind. Das reine Helium zirkuliert von natürlicher Konvektion getrieben durch den ringförmigen Spaltraum 28 und die Strömungsleitung 34. Während der Regeneration der Adsorber 4a und des Kaltkopfs 3 verschwindet der Temperaturgradient, der die Konvektion antreibt, wodurch die Zirkulation automatisch stoppt. Alternativ ist es auch möglich, mehrere Strömungsleitungen 34 einzurichten (hier nicht gezeigt).

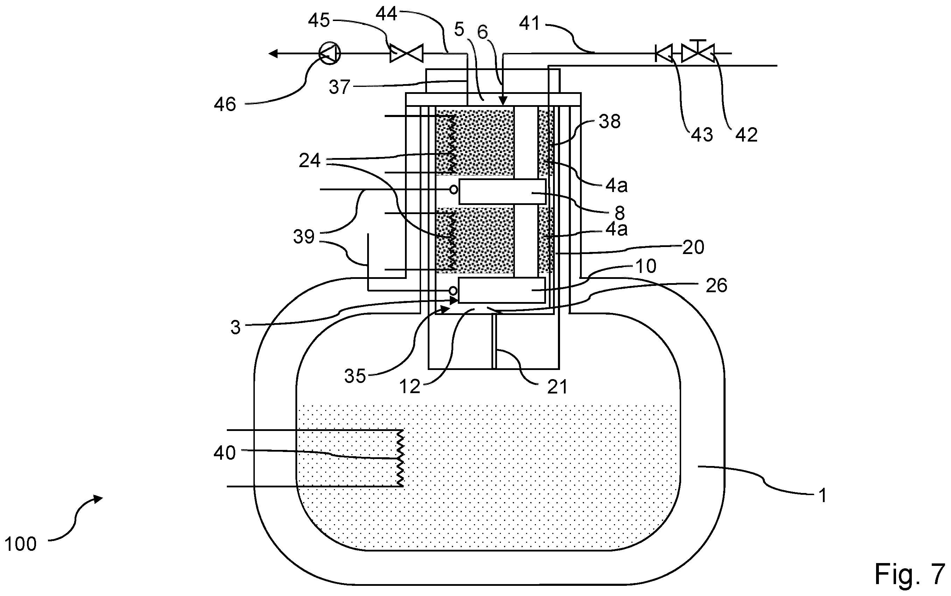

In **Fig. 7** ist ein schematischer Längsschnitt einer beispielhaften sechsten Ausführungsform einer erfindungsgemäßen Vorrichtung 100 ähnlich wie in Fig. 4 dargestellt. Zusätzlich zum Einspeisungsanschluss 6 für einen Gasstrom zu reinigenden Heliums umfasst die Vorrichtung 100 einen Abführanschluss **37** für Verunreinigungen. Im Kaltkopfbehälter 20 sind eine Spülleitung **38** für ein Spülgas und zwei optische Kontrolleinrichtung **39** ausgebildet. Das vakuumisolierte Speichergefäß 1 umfasst zudem ein Speichergefäß-Heizelement **40.**

Über den Abführanschluss 37, der am raumtemperaturwarmen Endabschnitt 5 des Kaltkopfs 3 ausgebildet ist, werden in einer Phase der Regeneration der Adsorber 4a und des Kaltkopfs 3 die ausgefrorenen Verunreinigungen abgeführt. Dazu wird an einer Einspeisungsleitung **41** ein Druckregelventil **42** geschlossen, damit kein Gasstrom zu reinigenden Heliums mehr durch ein Ventil **43** zum Einspeisungsanschluss 6 fließt und in den Kaltkopfbehälter 20 geleitet wird. Zusätzlich wird die Ablauf-Kapillare 21 durch das verschließbare Ventil 26 geschlossen. Der Kaltkopf 3 wird nicht mehr aktiv gekühlt, damit er sich erwärmen kann. Für eine schnellere Erwärmung werden die Adsorber 4a hier durch Adsorber-Heizelemente 24 erwärmt. Typischerweise erfolgt die Erwärmung des Kaltkopfs 3 und des Adsorberbetts auf Raumtemperatur. An einer Abführleitung **44,** die mit dem Abführanschluss 37 verbunden ist, wird ein Sperrventil **45** geöffnet, um die Verunreinigen über die Abführleitung 44 zu entfernen. Durch eine Absaugpumpe **46** (beispielsweise eine Ölschieber- oder Membranpumpe), werden die Verunreinigungen effizient abgesaugt. Mittels der Spülleitung 38, die im Kaltkopfbehälter 20 vom raumtemperaturwarmen Endabschnitt 5 bis zur kältesten Kühlstufe 10 des Kaltkopfs 3 führt und in den unteren Bereich 35 des Gasraums 12 des Kaltkopfbehälters 20 mündet, wird ein Spülgas (z. B. Helium, Argon oder Stickstoff) in den Gasraum 12 geleitet, so dass die Verunreinigungen noch effizienter entfernt und herausgespült werden.

Zur Überwachung der Kühlstufen 8, 10 werden hier zwei optische Kontrolleinrichtungen 39 (beispielsweise umfassend je eine Glasfaserleitung sowie einen optischen Sensor oder eine Kamera, letzteres nicht dargestellt) verwendet. Die optischen Kontrolleinrichtungen 39 sind dabei direkt auf die Kühlstufen 8, 10 des Kaltkopfs 3 gerichtet. Über die optischen Kontrolleinrichtungen 39 wird der Beladungszustand der Kühlstufen 8, 10 beobachtet und damit der Zeitpunkt der Regeneration des Kaltkopfs 3 bestimmt.

Alternativ oder zusätzlich kann ein Überwachungsgerät (nicht näher dargestellt) genutzt werden, um den Zeitpunkt der Regeneration der Adsorber 4a zu bestimmen. Das Überwachungsgerät kann dabei bei Überschreiten eines festgelegten Grenzwerts entweder ein Signal erzeugen um anzuzeigen, dass eine Regeneration der Adsorber 4a nötig ist oder so eingestellt sein, dass es bei Überschreiten des festgelegten Grenzwerts die Regeneration automatisch in die Wege leitet. Ist beispielsweise am Einspeisungsanschluss 6 ein definierter Heliumzufluss eingerichtet, kann eine Druckdifferenz zwischen dem vakuumisolierten Speichergefäß 1 und dem Einspeisungsanschluss 6 überwacht werden, und ab einem bestimmten Druckdifferenz-Grenzwert zeigt das Überwachungsgerät den Regenerationsbedarf an. Sind in einem anderen Beispiel am Einspeisungsanschluss 6 und im vakuumisolierten Speichergefäß 1 hingegen definierte (meist feste) Drücke eingerichtet, kann eine Flussrate von am Einspeisungsanschluss 6 zugeführtem Helium überwacht werden, und ab einem bestimmten Flussraten-Grenzwert zeigt das Überwachungsgerät den Regenerationsbedarf an.

Weiterhin ist es möglich, mehrere Temperatursensoren (nicht näher dargestellt) in der Vorrichtung 100 zu verbauen, um den Zeitpunkt der Regeneration der Adsorber 4a zu bestimmen oder eine mögliche Fehlfunktion zu entdecken. Diese Temperatursensoren können insbesondere im vakuumisolierten Speichergefäß 1, am Kaltkopf 3 (z. B. an den Kühlstufen 8, 10) und an den Adsorbern 4a angebracht werden.

Zur weiteren Überwachung der Vorrichtung 100 kann das vakuumisolierte Speichergefäß 1 mit einem Drucksensor (nicht näher dargestellt) versehen sein, der mit einem Steuergerät verbunden ist (ebenfalls nicht

gezeigt). Stellt das Steuergerät beispielsweise fest, dass der Druck im vakuumisolierten Speichergefäß 1 einen unter Grenzdruck $P_{untgr}$ unterschreitet oder einen oberen Grenzdruck $P_{obgr}$ überschreitet, kann das Steuergerät dann eine Heizleistung am Speichergefäß-Heizelement 40, welches wie in der hier gezeigten Abbildung im vakuumisolierten Speichergefäß 1 ausgebildet ist, oder eine Kühlleistung am Kaltkopf 3 regeln und so den Druck im vakuumisolierten Speichergefäß 1 verändern.

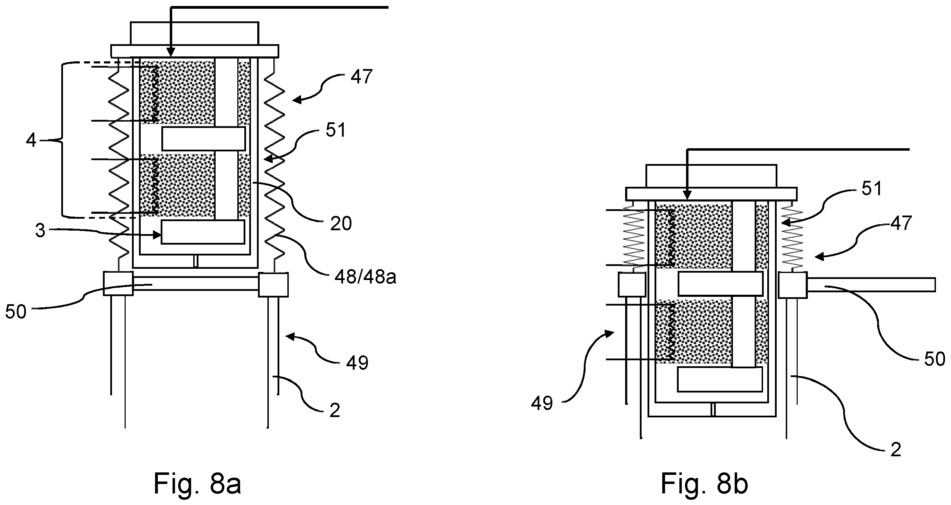

Die **Fig. 8a** zeigt einen schematischen Längsschnitt eines beispielhaften Halsrohres 2 des vakuumisolierten Speichergefäßes 1 für die dritte Ausführungsform der erfindungsgemäßen Vorrichtung mit einem Kaltkopfbehälter 20 ähnlich wie in Fig. 4, wobei das vakuumisolierten Speichergefäß einen Aufsatzteil **47** mit einer flexiblen Wandung **48** und einen vakuumisolierten Hauptteil **49** umfasst. In Fig. 8a ist ein ausgefahrener Zustand gezeigt.

Zwischen Hauptteil 49 und Aufsatzteil 47 ist ein Trennschieber **50** eingerichtet. In dem hier gezeigten Zustand ist der Trennschieber 50 geschlossen, wodurch der Hauptteil 49 gasdicht vom Aufsatzteil 47 getrennt ist.

Im Aufsatzteil 47 ist im gezeigten Zustand eine Baugruppe **51** angeordnet, die den Kaltkopf 3 (soweit er in das Halsrohr 2 einragt), das Adsorberbett 4 und in der gezeigten Ausführungsform auch den Kaltkopfbehälter 20 umfasst. Das Aufsatzteil 47 ist mit der flexiblen Wandung 48, hier einem (beispielsweise metallischem) Faltenbalg **48a,** ausgebildet. Die Baugruppe 51 ist gegenüber dem Hauptteil 49 verfahrbar und befindet sich hier in einem komplett ausgefahrenen Zustand, wodurch sich Baugruppe 51 nur im Aufsatzteil 47 befindet.

In diesem komplett ausgefahrenen Zustand kann der Trennschieber 50 betätigt und bei geschlossenem Trennschieber 50 der Aufsatzteil 47 mit dem Kaltkopfbehälter 20 vom Hauptteil 49 getrennt werden. Hierdurch wird es beispielsweise einfach möglich, den Hauptteil 49 des vakuumisolierten Speichergefäßes in die Nähe eines NMR-Magneten zu verbringen und das flüssige Helium im Hauptteil 49 zu transferieren. Der Aufsatzteil 47 mit der Baugruppe 51 kann dann separat aufbewahrt werden, und braucht insbesondere nicht verbracht zu werden. Hierdurch kann zum einen erreicht werden, dass die Leitungen und elektrischen Verbindungen zur Baugruppe 51 nicht getrennt werden müssen; zum anderen muss nicht darauf geachtet werden, dass die unterschiedlichen Bauteile in der Baugruppe 51 kompatibel mit großen magnetischen Streufeldern (wie etwa in der Nähe von NMR-Magneten) sind.

**Fig. 8b** zeigt einen schematischen Längsschnitt des beispielhaften Halsrohres 2 von Fig. 8a mit einer in den Hauptteil 49 eingefahrenen Baugruppe 51 und zusammengefaltetem Aufsatzteil 47 bei geöffnetem Trennschieber 50.

Die Innenräume von Hauptteil 49 und Aufsatzteil 47 sind zueinander offen und die Baugruppe 51 ragt in den Hauptteil 49 hinein. Durch das Versenken der Baugruppe 51 in den Hauptteil 49 wird eine gute thermodynamische Effizienz der Vorrichtung erreicht, da der Abstand von Baugruppe 51 zum vakuumisolierten Hauptteil 49 des Speichergefäßes und dem dort gelagerten flüssigen Helium verringert wird.

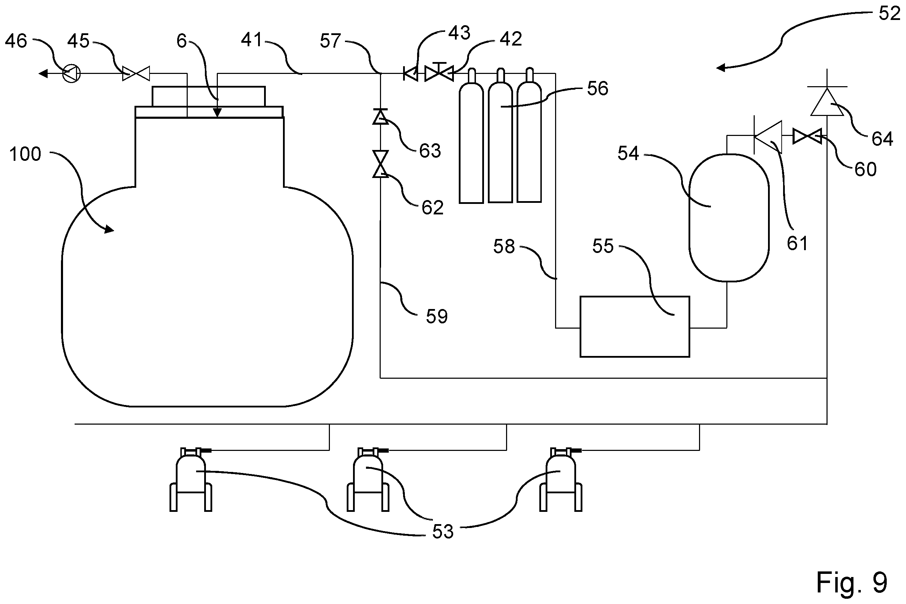

In **Fig.** 9 ist ein Rohrleitungs- und Instrumenten(=R&I)-Fließschema einer beispielhaften Ausführungsform eines erfindungsgemäßen Heliumrückgewinnungssystems **52** gezeigt.

Das Heliumrückgewinnungssystem 52 umfasst dabei die erfindungsgemäße Vorrichtung 100, drei heliumgekühlte Anwendungsgeräte **53,** einen Ballonspeicher **54** für gasförmiges Helium, einen Kompressor **55,** in welchem das gasförmige Helium aus dem Ballonspeicher 54 komprimiert wird, und einen Druckspeicher **56** für das komprimierte gasförmige Helium aus dem Kompressor 55. Der Einspeisungsanschluss 6 der Vorrichtung 100 ist mit seiner Einspeisungsleitung 41 über eine Verzweigung **57** mit einer ersten Zuleitung **58** für gasförmiges Helium und einer zweiten Zuleitung **59** für gasförmiges Helium verbunden.

Die erste Zuleitung 58 beinhaltet eine Absperrarmatur **60** des Ballonspeichers 54, ein Ventil **61,** welches bei einem Druck $P_{Z1}$ öffnet, den Ballonspeicher 54, den Kompressor 55, den Druckspeicher 56, das Druckregelventil 42 und das Ventil 43, das hier als Rückschlagventil ausgebildet ist. Die zweite Zuleitung 59 beinhaltet eine Absperrarmatur **62** und ein Rückschlagventil **63,** welches bei einem Druck $P_{Z2}$ öffnet.

Je nach Betriebsmodus der heliumgekühlten Anwendungsgeräte 53 ist es vorteilhaft, das verdampfte Helium entweder über die erste Zuleitung 58 oder die zweite Zuleitung 59 zur Vorrichtung 100 zu führen. Wird flüssiges Helium in die heliumgekühlten Anwendungsgeräte 53 nachgefüllt, kann schnell eine große Menge gasförmigen Heliums entstehen. Wird diese große Menge gasförmigen Heliums direkt in die erfindungsgemäße Vorrichtung 100 geleitet, könnte dies schnell zu einer Überlastung führen. Um dies zu vermeiden, wird die Absperrarmatur 62 geschlossen und das gasförmige Helium über die erste Zuleitung 58 in den Ballonspeicher 54 geführt und dort gesammelt. Das im Ballonspeicher 54 gesammelte gasförmige Helium wird mit dem Kompressor 55 nach und nach komprimiert und im Druckspeicher 56 gespeichert. Über das Druckregelventil 42 wird dann kontrolliert gasförmiges Helium in die erfindungsgemäße Vorrichtung 100 geleitet. Sollte von den heliumgekühlten Anwendungsgeräten 53 gasförmiges Helium mit hohem Druck kommen, das den Ballonspeicher 54 beschädigen könnte, öffnet ein Überdruckventil **64,** wenn ein bestimmter Druck $P_{über}$ überschritten wird. Dabei gilt $P_{über} > P_{Z1}$, da ansonsten das gasförmige Helium nur über das Überdruckventil 64 entweichen würde und nicht in den Ballonspeicher fließen würde.

Im Normalbetrieb der heliumgekühlten Anwendungsgeräte 53 entstehen in der Regel nur geringe Mengen gasförmigen Heliums, die meist sehr rein sind. Anstatt diese geringen Mengen gasförmigen Heliums durch den Ballonspeicher 54 zu führen wird in diesem Fall das gasförmige Helium über die zweite Zuleitung 59 direkt der erfindungsgemäßen Vorrichtung 100 zugeführt. Hierzu wird die Absperrarmatur 62 geöffnet, wodurch das gasförmige Helium Rückschlagventil 63 durchfließt. Damit gasförmiges Helium bei geringem Druck (kleiner $P_{Z1}$) durch Rückschlagventil 63 in Richtung der Vorrichtung 100 und nicht durch das Ventil 61 und damit erst in den Ballonspeicher 54 fließt, gilt $P_{Z1} > P_{Z2}$. Durch die Umgehung des Ballonspeichers 54 kann eine Verunreinigung des im Normalbetrieb aus den Anwendungsgeräten 53 kommenden, sehr reinen Heliums im Ballonspeicher 54 vermieden werden; in den Ballonspeicher 54 kann Umgebungsluft und vor allem Feuchtigkeit in gewissem Umfang eindiffundieren.

Wenn die erfindungsgemäße Vorrichtung 100 regeneriert wird, werden das Druckregelventil 42 und die Absperrarmatur 62 geschlossen, um den Fluss des Heliumgases zu unterbinden; etwaiges neu anfallendes Heliumgas aus den Anwendungsgeräten 53 kann einstweilen im Ballonspeicher 54 gesammelt werden. Es wird dann das Sperrventil 45 geöffnet und die Verunreinigungen über die Absaugpumpe 46 aus der erfindungsgemäßen Vorrichtung 100 abgesaugt. Bei einer allgemeinen Wartung des Heliumrückgewinnungssystems 52 werden, falls nötig, die Absperrarmatur 62 und die Absperrarmatur 60 des Ballonspeichers 54 geschlossen.

Zusammenfassend stellt die Erfindung eine Vorrichtung bereit, in welcher mit nur einem Kaltkopf eine kombinierte Reinigung und Verflüssigung erfolgen kann. Dazu werden der Kaltkopf und ein Adsorberbett in einem Gasraum angeordnet, der typischerweise durch ein Halsrohr eines vakuumisolierten Sammelgefäßes oder einen eigenen Kaltkopfbehälter begrenzt wird. Durch die Einrichtung von unterschiedlichen Temperaturen oder bevorzugt einem Temperaturgradienten im Adsorberbett durch thermische Kopplung mit dem Kaltkopf über mehrere Aus- und Einkopplungsorte, bevorzugt kontinuierlich aufeinander folgende Aus- und Einkopplungsorte, können Verunreinigungen bei vergleichsweise hohen Temperaturen, und oft bei der höchstmöglichen Temperatur ausgefroren werden, was thermodynamisch hoch effizient ist.

Bezugszeichenliste

| 1 | vakuumisoliertes Speichergefäß |
| 1a | äußere Wand (des vakuumisolierten Speichergefäßes) |
| 1b | innere Wand (des vakuumisolierten Speichergefäßes) |
| 2 | Halsrohr |
| 3 | Kaltkopf |
| 4 | Adsorberbett |
| 4a | Adsorber |
| 4a' | wärmster (oberster) Adsorber |
| 4a" | kälterer (mittlerer) Adsorber |

| | | | | |
|---|---|---|---|---|
| 4a‴ | kältester (unterster) Adsorber | | 45 | Sperrventil |
| 5 | raumtemperaturwarmer (hinterer) Endabschnitt | | 46 | Absaugpumpe |
| 5a | innere Wand | | 47 | Aufsatzteil |
| 6 | Einspeisungsanschluss | | 48 | flexible Wandung |
| 6a | Einspeisungsraum | | 48a | Faltenbalg |
| 6b | Freiraum | | 49 | Hauptteil |
| 7 | Regenerator | | 50 | Trennschieber |
| 8 | wärmste Kühlstufe | | 51 | Baugruppe |
| 8a | wärmere Kühlstufe | | 52 | Heliumrückgewinnungssystem |
| 9 | Regenerator | | 53 | heliumgekühltes Anwendungsgerät |
| 10 | kälteste Kühlstufe | | 54 | Ballonspeicher |
| 10a | kältere Kühlstufe | | 55 | Kompressor |
| 11 | Innenraum | | 56 | Druckspeicher |
| 12 | Gasraum | | 57 | Verzweigung |
| 13 | Innenwand (des vakuumisolierten Speichergefäßes) | | 58 | erste Zuleitung |
| | | | 59 | zweite Zuleitung |
| 14 | Auskopplungsorte | | 60 | Absperrarmatur (des Ballonspeichers) |
| 14a | hinterster Auskopplungsort | | 61 | Ventil (mit Öffnungsdruck $P_{z1}$) |
| 14b | vorderster Auskopplungsort | | 62 | Absperrarmatur |
| 15 | Einkopplungsorte | | 63 | Rückschlagventil (mit Öffnungsdruck $P_{z2}$) |
| 15a | hinterster Einkopplungsort | | 64 | Überdruckventil (mit Öffnungsdruck $P_{über}$) |
| 15b | vorderster Einkopplungsort | | 100 | erfindungsgemäße Vorrichtung |
| 16 | Auskopplungsbereich | | ER | Erstreckungsrichtung |
| 17 | Einkopplungsbereich | | $L_{AK}$ | Länge in Erstreckungsrichtung des Auskopplungsbereichs |
| 18 | Teilabschnitt (des Kaltkopfs) | | | |
| 18a | hinterer Teilabschnitt | | $L_{EK}$ | Länge in Erstreckungsrichtung des Einkopplungsbereichs |
| 18b | weiterer Teilabschnitt | | | |
| 19 | Teilabschnitt (des Adsorberbetts) | | W | Wandstärke (der unterseitigen Gefäßwand) |
| 19a | hinterer Teilabschnitt | | | |
| 19b | weiterer Teilabschnitt | | | |

Referenzliste

[D1]    JP H11-118349 A

[D2]    JP 4 570 546 B2

[D3]    WO 2016/005463 A1

[D4]    EP 2 567 159 B1

[D5]    KR 10 2142312 B1

[D6]    CN 107677045 A

[D7]    Wang, "Intermediate cooling from pulse tube and regenerator in a 4K pulse tube cryocooler", Cryogenics 48(3): 154-159

[D8]    https://www.cryomech.com/articles/automatic-helium-purifier/ (aufgerufen am 14.04.2021)

[D9]    https://qd-europe.com/ch/en/product/helium-gas-purifier/ (aufgerufen am 14.04.2021)

[D10]   https://quantum-technology.com/purify/cryogenic-purification.html (aufgerufen am 14.04.2021)

20 | Kaltkopfbehälter
21 | Ablauf-Kapillare
22 | unterseitige Gefäßwand (des Kaltkopfbehälters)
23 | innerer Boden (des Kaltkopfbehälters)
24 | Adsorber-Heizelement
25 | Rückführungs-Kapillare
26 | verschließbares Ventil (der Ablauf-Kapillare)
27 | verschließbares Ventil (der Rückführungs-Kapillare)
28 | ringförmiger Spaltraum
29 | Außenwand (des Kaltkopfbehälters)
29a | Innenwand (des Kaltkopfbehälters)
30 | Durchführung
31 | oberes Ende (des Kaltkopfbehälters)
32 | oberer Bereich (des ringförmigen Spaltraums)
33 | oberer Bereich (des Kaltkopfbehälters)
33a | Durchführungsraum
34 | Strömungsleitung
35 | unterer Bereich (des Kaltkopfbehälters)
36 | Wärmetauscher
37 | Abführanschluss
38 | Spülleitung
39 | optische Kontrolleinrichtung
40 | Speichergefäß-Heizelement
41 | Einspeisungsleitung
42 | Druckregelventil
43 | Ventil (in Richtung Einspeisungsanschluss)
44 | Abführleitung

[D11] https://www.724pridecryogenics.com/en/prode tail.asp?id=701 (aufgerufen am 15.04.2021)

[D12] A. Choudhury und S. Sahu, "Experimental helium liquefier with a GM cryocooler", Review of Scientific Instrumenst 88, 065116 (2017)

**Patentansprüche**

1. Vorrichtung (100) zur Reinigung und Verflüssigung von Helium, umfassend

- einen Kaltkopf (3), mit

einem raumtemperaturwarmen, hinteren Endabschnitt (5),
und zumindest einer hintersten, im Betrieb wärmsten Kühlstufe (8) und einer vordersten, im Betrieb kältesten Kühlstufe (10), wobei der raumtemperaturwarme Endabschnitt (5) und die Kühlstufen (8, 10) entlang einer Erstreckungsrichtung (ER) des Kaltkopfs (3) aufeinander folgend angeordnet sind,

- ein Adsorberbett (4), das thermisch an den Kaltkopf (3) gekoppelt ist,
- und ein vakuumisoliertes Speichergefäß (1) für verflüssigtes Helium, wobei durch die Vorrichtung (100) ein Gasraum (12) eingerichtet ist, in den der Kaltkopf (3) mit seinen Kühlstufen (8, 10) hineinragt und der das Adsorberbett (4) enthält,
wobei der Gasraum (12) von dem raumtemperaturwarmen Endabschnitt (5) des Kaltkopfs (3), an welchem ein Einspeisungsanschluss (6) für zu reinigendes Heliumgas ausgebildet ist, entlang des Kaltkopfs (3) und über das Adsorberbett (4) zur kältesten Kühlstufe (10) des Kaltkopfs (3) führt, und wobei eine thermische Kopplung des Kaltkopfs (3) zum Adsorberbett (4) von wenigstens zwei Auskopplungsorten (14) am Kaltkopf (3) zu wenigstens zwei Einkopplungsorten (15) am Adsorberbett (4) eingerichtet ist, **dadurch gekennzeichnet,**
**dass** ein Auskopplungsbereich (16), über den sich die Auskopplungsorte (14) am Kaltkopf (3) verteilen, eine Länge ($L_{AK}$) in Erstreckungsrichtung (ER) des Kaltkopfs (3) von wenigstens 5 cm aufweist,
wobei eine Auskopplungs-Temperaturdifferenz am Kaltkopf (3) zwischen einem hintersten, dem raumtemperaturwarmen Ende des Kaltkopfs (3) am nächsten liegenden Auskopplungsort (14a) und einem vordersten, der kältesten Kühlstufe (10) am nächsten liegenden Auskopplungsort (14b) wenigstens 50 K beträgt,
und **dass** ein Einkopplungsbereich (17), über den sich die Einkopplungsorte (15) am Adsorberbett (4) verteilen, eine Länge ($L_{EK}$) in Erstreckungsrichtung (ER) des Kaltkopfs (3) von wenigstens 5 cm aufweist,
wobei eine Einkopplungs-Temperaturdifferenz am Adsorberbett (4) zwischen einem hintersten, dem raumtemperaturwarmen Ende des Kaltkopfs (3) am nächsten liegenden Einkopplungsort (15a) und einem vordersten, der kältesten Kühlstufe (10) am nächsten liegenden Einkopplungsort (15b) wenigstens 50 K beträgt.

2. Vorrichtung (100) nach Anspruch 1, **dadurch gekennzeichnet, dass** die Auskopplungs-Temperaturdifferenz am Kaltkopf (3) zwischen dem hintersten, dem raumtemperaturwarmen Ende des Kaltkopfs (3) am nächsten liegenden Auskopplungsort (14a) und dem vordersten, der kältesten Kühlstufe (10) am nächsten liegenden Auskopplungsort (14b) wenigstens 100 K beträgt,
und dass die Einkopplungs-Temperaturdifferenz am Adsorberbett (4) zwischen dem hintersten, dem raumtemperaturwarmen Ende des Kaltkopfs (3) am nächsten liegenden Einkopplungsort (15a) und dem vordersten, der kältesten Kühlstufe (10) am nächsten liegenden Einkopplungsort (15b) wenigstens 100 K beträgt.

3. Vorrichtung (100) nach einem der Ansprüche 1 oder 2, **dadurch gekennzeichnet, dass** zwischen zumindest einem Teilabschnitt (18) des Kaltkopfs (3) und zumindest einem Teilabschnitt (19) des Adsorberbetts (4) entlang der Erstreckungsrichtung (ER) des Kaltkopfs (3) eine kontinuierliche thermische Kopplung eingerichtet ist,
wobei sich der jeweilige Teilabschnitt (18) des Kaltkopfs (3) in Erstreckungsrichtung (ER) des Kaltkopfs (3) über wenigstens eine Länge von 5 cm erstreckt, und der jeweilige Teilabschnitt (19) des Adsorberbetts (4) in Erstreckungsrichtung (ER) des Kaltkopfs (3) über wenigstens eine Länge von 5 cm erstreckt.

4. Vorrichtung (100) nach Anspruch 3, **dadurch gekennzeichnet,**

**dass** ein hinterer Teilabschnitt (18a) des Kaltkopfs (3) zwischen dem raumtemperaturwarmen Endabschnitt (5) und der wärmsten Kühlstufe (8) eingerichtet ist, und ein mit diesem kontinuierlich thermisch gekoppelter, hinterer Teilabschnitt (19a) des Adsorberbetts (4) eingerichtet ist,
wobei die wärmste Kühlstufe (8) eine Temperatur $T_w$ aufweist,
**dass** entlang des hinteren Teilabschnitts (18a) des Kaltkopfs (3) in Erstreckungsrichtung (ER) des Kaltkopfs (3) der Kaltkopf (3) einen kontinuierlichen Temperaturgradienten aufweist, der eine Temperaturdifferenz $TD_{HKK}$ mit $TD_{HKK} \geq (293K-T_w)/2$ überspannt,

und **dass** entlang des hinteren Teilabschnitts (19a) des Adsorberbetts (4) in Erstreckungsrichtung (ER) des Kaltkopfs (3) das Adsorberbett (4) einen kontinuierlichen Temperaturgradienten aufweist, der eine Temperaturdifferenz $TD_{HAD}$ mit $TD_{HAO} \geq (293K-T_w)/2$ überspannt.

5. Vorrichtung (100) nach Anspruch 3 oder 4, **dadurch gekennzeichnet, dass** wenigstens ein weiterer Teilabschnitt (18b) des Kaltkopfs (3) zwischen einer wärmeren Kühlstufe (8a) und einer kälteren Kühlstufe (10a) des Kaltkopfs (3) eingerichtet ist, und wenigstens ein mit diesem kontinuierlich thermisch gekoppelter, weiterer Teilabschnitt (19b) des Adsorberbetts (4) eingerichtet ist,

wobei jeweils die wärmere Kühlstufe (8a) eine obere Temperatur $T_{ob}$ aufweist und die kältere Kühlstufe (10a) eine untere Temperatur $T_{unt}$ aufweist, dass jeweils entlang des weiteren Teilabschnitts (18b) des Kaltkopfs (3) in Erstreckungsrichtung (ER) des Kaltkopfs (3) der Kaltkopf (3) einen kontinuierlichen Temperaturgradienten aufweist, der eine Temperaturdifferenz $TD_{WKK}$ mit

$$TD_{WKK} \geq (T_{ob}-T_{unt})/2 \text{ überspannt,}$$

und dass jeweils entlang des weiteren Teilabschnitts (19b) des Adsorberbetts (4) in Erstreckungsrichtung (ER) des Kaltkopfs (3) das Adsorberbett (4) einen kontinuierlichen Temperaturgradienten aufweist, der eine Temperaturdifferenz $TD_{WAD}$ mit

$$TD_{WAD} \geq (T_{ob}-T_{unt})/2 \text{ überspannt.}$$

6. Vorrichtung (100) nach einem der Ansprüche 1 bis 5, **dadurch gekennzeichnet, dass** das vakuumisolierte Speichergefäß (1) mit einem Halsrohr (2) ausgebildet ist, wobei der Kaltkopf (3) in das Halsrohr (2) hineinragt und das Adsorberbett (4) im Halsrohr (2) angeordnet ist, und eine Innenwand (13) des Halsrohrs (2) den Gasraum (12) lateral begrenzt, und der Gasraum (12) nach unten hin in das vakuumisolierte Speichergefäß (1) offen ist.

7. Vorrichtung (100) nach einem der Ansprüche 1 bis 5, **dadurch gekennzeichnet, dass** die Vorrichtung (100) einen Kaltkopfbehälter (20) umfasst, wobei der Kaltkopf (3) in den Kaltkopfbehälter (20) hineinragt und das Adsorberbett (4) im Kaltkopfbehälter (20) angeordnet ist, und wobei der Kaltkopfbehälter (20) den Gasraum (12) nach außen begrenzt.

8. Vorrichtung (100) nach Anspruch 7, **dadurch gekennzeichnet, dass** der Kaltkopfbehälter (20) vakuumisoliert ausgebildet ist.

9. Vorrichtung (100) nach Anspruch 7 oder 8, **dadurch gekennzeichnet, dass** der Kaltkopfbehälter (20) in das vakuumisolierten Speichergefäß (1) hineinragt, insbesondere in ein Halsrohr (2) des vakuumisolierten Speichergefäßes (1).

10. Vorrichtung (100) nach Anspruch 9, **dadurch gekennzeichnet, dass** der Kaltkopfbehälter (20) eine Ablauf-Kapillare (21) für flüssiges Helium aufweist, die durch eine unterseitige Gefäßwand (22) des Kaltkopfbehälters (20) zum vakuumisolierten Speichergefäß (1) führt und am inneren Boden (23) des Kaltkopfbehälters (20) im Gasraum (12) mündet, insbesondere wobei die Ablauf-Kapillare (21) für flüssiges Helium mit einem verschließbaren Ventil (26) ausgebildet ist.

11. Vorrichtung (100) nach einem der Ansprüche 9 oder 10, **dadurch gekennzeichnet, dass** der Kaltkopfbehälter (20) eine Rückführungs-Kapillare (25) für verdampftes Helium aus dem vakuumisolierten Speichergefäß (1) aufweist, die durch eine unterseitige Gefäßwand (22) des Kaltkopfbehälters (20) führt und oberhalb eines inneren Bodens (23) des Kaltkopfbehälters (20) im Gasraum (12) mündet, insbesondere an der kältesten Kühlstufe (10), insbesondere wobei die Rückführungs-Kapillare (25) für verdampftes Helium mit einem verschließbaren Ventil (27) ausgebildet ist.

12. Vorrichtung (100) nach einem der Ansprüche 9 oder 10, **dadurch gekennzeichnet, dass** an einem oberen Ende (31) des Kaltkopfbehälters (20), das nahe dem raumtemperaturwarmen Endabschnitt (5) des Kaltkopfs (3) angeordnet ist, wenigstens eine Durchführung (30) für verdampftes Helium aus dem vakuumisolierten Speichergefäß (1) ausgebildet ist, insbesondere wobei innerhalb des vakuumisolierten Speichergefäßes (1) zwischen einer Innenwand (13) des vakuumisolierten Speichergefäßes (1) und einer Außenwand (29) des Kaltkopfbehälters (20) ein ringförmiger Spaltraum (28) eingerichtet ist und die wenigstens eine Durchführung (30) von einem oberen Bereich (32) des ringförmigen Spaltraums (28) in einen oberen Bereich (33) des Kaltkopfbehälters (20) führt.

13. Vorrichtung (100) nach Anspruch 12, **dadurch gekennzeichnet, dass** im Kaltkopfbehälter (20) wenigstens eine Strömungsleitung (34) ausgebildet ist, die von der wenigstens einen Durchführung (30) am oberen Ende (31) des Kaltkopfbehälters (20) entlang des Kaltkopfs (3) zur kältesten Kühlstufe (10) führt und in einem unteren Bereich (35) des Gasraums (12) mündet.

**14.** Vorrichtung (100) nach einem der vorhergehenden Ansprüche, **dadurch gekennzeichnet,**

> **dass** an dem raumtemperaturwarmen Endabschnitt (5) des Kaltkopfs (3) ein Abführanschluss (37) für Verunreinigungen ausgebildet ist, insbesondere wobei weiterhin eine Spülleitung (38) für ein Spülgas vom raumtemperaturwarmen Endabschnitt (5) des Kaltkopfs (3) zur kältesten Kühlstufe (10) führt und in einem unteren Bereich (35) des Gasraums (12) mündet, und insbesondere wobei der Abführanschluss (37) an eine Abführleitung (44) angeschlossen ist, in der eine Absaugpumpe (46) angeordnet ist.

**15.** Heliumrückgewinnungssystem (52), umfassend eine Vorrichtung (100) zum Reinigen und Verflüssigen von Helium nach einem der vorhergehenden Ansprüche sowie wenigstens ein heliumgekühltes Anwendungsgerät (53) und einen Ballonspeicher (54) für gasförmiges Helium,

> wobei an den Einspeisungsanschluss (6) über eine Verzweigung (57) eine erste Zuleitung (58) für gasförmiges Helium und eine zweite Zuleitung (59) für gasförmiges Helium angeschlossen sind, wobei die erste Zuleitung (58) vom Ballonspeicher (54) zur Verzweigung (57) führt, insbesondere wobei die erste Zuleitung (58) weiterhin einen Kompressor (55) und einen Druckspeicher (56) für gasförmiges Helium enthält, und wobei die zweite Zuleitung (59) vom wenigstens einen heliumgekühlten Anwendungsgerät (53) unter Umgehung des Ballonspeichers (54) zur Verzweigung führt (57).

**16.** Verfahren zur Reinigung und Verflüssigung von Helium,

> wobei ein zu reinigendes Heliumgas über ein Adsorberbett (4) geleitet und dadurch aufgereinigt wird, wobei das Adsorberbett (4) mit einem Kaltkopf (3) gekühlt wird, wobei der Kaltkopf (3) wenigstens zwei Kühlstufen (8, 10) umfasst, nämlich zumindest eine wärmste Kühlstufe (8), die bei einer Temperatur $T_w$ betrieben wird, und eine kälteste Kühlstufe (10), die bei einer Temperatur $T_k$ betrieben wird, mit $T_w > T_k$, und wobei durch das Adsorberbett (4) gereinigtes Heliumgas verflüssigt wird, und verflüssigtes Helium in einem vakuumisolierten Speichergefäß (1) gesammelt wird, wobei das zu reinigende Heliumgas in einen Gasraum (12) geleitet wird, in welchen der Kaltkopf (3) mit seinen Kühlstufen (8, 10) einragt und der das Adsorberbett (4) enthält, wobei das zu reinigende Heliumgas durch den Gasraum (12) von einem raumtemperaturwarmen Endabschnitt (5) des Kaltkopfs (3), an welchem ein Einspeisungsanschluss (6) für das zu reinigende Heliumgas ausgebildet ist, entlang des Kaltkopfs (3) und über das Adsorberbett (4) zu der kältesten Kühlstufe (10) des Kaltkopfs (3) geführt wird, deren Temperatur $T_k$ so gewählt ist, dass durch das Adsorberbett (4) gereinigtes Heliumgas an der kältesten Kühlstufe (10) verflüssigt wird, und wobei eine thermische Kopplung des Kaltkopfs (3) zum Adsorberbett (4) von wenigstens zwei Auskopplungsorten (14) am Kaltkopf (3) zu wenigstens zwei Einkopplungsorten (15) am Adsorberbett (4) eingerichtet ist, **dadurch gekennzeichnet,** **dass** die thermische Kopplung des Kaltkopfs (3) zum Adsorberbett (4) derart eingerichtet ist, **dass** eine Auskopplungs-Temperaturdifferenz am Kaltkopf (3) zwischen einem hintersten, dem raumtemperaturwarmen Ende des Kaltkopfs (3) am nächsten liegenden Auskopplungsort (14a) und einem vordersten, der kältesten Kühlstufe (10) am nächsten liegenden Auskopplungsort (14b) wenigstens 50 K, bevorzugt wenigstens 100 K beträgt, und eine Einkopplungs-Temperaturdifferenz am Adsorberbett (4) zwischen einem hintersten, dem raumtemperaturwarmen Ende des Kaltkopfs (3) am nächsten liegenden Einkopplungsort (15a) und einem vordersten, der kältesten Kühlstufe (10) am nächsten liegenden Einkopplungsort (15b) wenigstens 50 K, bevorzugt wenigstens 100 K beträgt.

**17.** Verfahren nach Anspruch 16, **dadurch gekennzeichnet,**

> **dass** der raumtemperaturwarme Endabschnitt (5) und die Kühlstufen (8, 8a, 10, 10a) entlang einer Erstreckungsrichtung (ER) des Kaltkopfs (3) aufeinander folgend angeordnet sind, **dass** zwischen zumindest einem Teilabschnitt (18) des Kaltkopfs (3) und zumindest einem Teilabschnitt (19) des Adsorberbetts (4) entlang der Erstreckungsrichtung (ER) des Kaltkopfs (3) eine kontinuierliche thermische Kopplung eingerichtet ist, derart, **dass** entlang des Teilabschnitts (18) des Kaltkopfs (3) in Erstreckungsrichtung (ER) des Kaltkopfs (3) der Kaltkopf (3) einen kontinuierlichen Temperaturgradienten aufweist, der eine Temperaturdifferenz $TD_{TKK}$ mit $TD_{TKK} \geq 25K$, bevorzugt $TD_{TKK} \geq 50K$, überspannt,

und entlang des Teilabschnitts (19) des Adsorberbetts (4) in Erstreckungsrichtung (ER) des Kaltkopfs (3) das Adsorberbett (4) einen kontinuierlichen Temperaturgradienten aufweist, der eine Temperaturdifferenz $TD_{TAD}$ mit $TD_{TAD} \geq 25K$, bevorzugt $TD_{TAD} \geq 50K$, überspannt.

18. Verwendung einer Vorrichtung (100) nach einem der Ansprüche 1 bis 15 in einem Verfahren nach einem der Ansprüche 16 oder 17.

**Claims**

1. Apparatus (100) for purifying and liquefying helium, comprising

   - a cold head (3) with

     a room-temperature, rear end portion (5), and at least one rearmost cooling stage (8), which is warmest during operation, and one foremost cooling stage (10), which is coldest during operation, wherein the room-temperature end portion (5) and the cooling stages (8, 10) are arranged in succession along a direction of extension (ER) of the cold head (3),

     - an adsorber bed (4) that is thermally coupled to the cold head (3),
     - and a vacuum-insulated storage vessel (1) for liquefied helium, wherein the apparatus (100) provides a gas space (12) into which the cold head (3) protrudes with its cooling stages (8, 10) and which contains the adsorber bed (4), wherein the gas space (12) leads from the room-temperature end portion (5) of the cold head (3), on which a feed connection (6) for helium gas to be purified is formed, along the cold head (3) and via the adsorber bed (4) to the coldest cooling stage (10) of the cold head (3), and wherein a thermal coupling of the cold head (3) to the adsorber bed (4) is provided from at least two coupling-out locations (14) on the cold head (3) to at least two coupling-in locations (15) on the adsorber bed (4), **characterized in that** a coupling-out region (16) over which the coupling-out locations (14) on the cold head (3) are distributed has a length ($L_{AK}$) of at least 5 cm in the direction of extension (ER) of the cold head (3), wherein a coupling-out temperature difference at the cold head (3) between a rearmost coupling-out location (14a) nearest to the room-temperature end of the cold head (3) and a foremost coupling-out location (14b) nearest to the coldest cooling stage (10) is at least 50K, and **in that** a coupling-in region (17) over which the coupling-in locations (15) on the adsorber bed (4) are distributed has a length ($L_{EK}$) of at least 5 cm in the direction of extension (ER) of the cold head (3), wherein a coupling-in temperature difference at the adsorber bed (4) between a rearmost coupling-in location (15a) nearest to the room-temperature end of the cold head (3) and a foremost coupling-in location (15b) nearest to the coldest cooling stage (10) is at least 50 K.

2. Apparatus (100) according to claim 1, **characterized in that** the coupling-out temperature difference at the cold head (3) between the rearmost coupling-out location (14a) nearest to the room-temperature end of the cold head (3) and the foremost coupling-out location (14b) nearest to the coldest cooling stage (10) is at least 100 K, and **in that** the coupling-in temperature difference at the adsorber bed (4) between the rearmost coupling-in location (15a) nearest to the room-temperature end of the cold head (3) and the foremost coupling-in location (15b) nearest to the coldest cooling stage (10) is at least 100 K.

3. Apparatus (100) according to one of claims 1 or 2, **characterized in that** a continuous thermal coupling is provided between at least one section (18) of the cold head (3) and at least one section (19) of the adsorber bed (4) along the direction of extension (ER) of the cold head (3), wherein the relevant section (18) of the cold head (3) extends in the direction of extension (ER) of the cold head (3) over at least a length of 5 cm, and the relevant section (19) of the adsorber bed (4) extends in the direction of extension (ER) of the cold head (3) over at least a length of 5 cm.

4. Apparatus (100) according to claim 3, **characterized in that**

   a rear section (18a) of the cold head (3) is provided between the room-temperature end portion (5) and the warmest cooling stage (8), and a rear section (19a) of the adsorber bed (4) that is continuously thermally coupled to this is provided, wherein the warmest cooling stage (8) has a temperature $T_w$, **in that**, along the rear section (18a) of the cold head (3) in the direction of extension (ER) of the cold head (3), the cold head (3) has a continuous temperature gradient which spans a temperature difference $TD_{HKK}$, where $TD_{HKK} \geq (293K-$

**25**

$T_w$)/2,

and **in that**, along the rear section (19a) of the adsorber bed (4) in the direction of extension (ER) of the cold head (3), the adsorber bed (4) has a continuous temperature gradient which spans a temperature difference $TD_{HAD}$, where $TD_{HAD} \geq (293K - T_w)/2$.

5. Apparatus (100) according to claim 3 or 4, **characterized in that**

at least one further section (18b) of the cold head (3) is provided between a warmer cooling stage (8a) and a colder cooling stage (10a) of the cold head (3), and at least one further section (19b) of the adsorber bed (4) that is continuously thermally coupled to this is provided, wherein, in each case, the warmer cooling stage (8a) has an upper temperature $T_{ob}$ and the colder cooling stage (10a) has a lower temperature $T_{unt}$, **in that**, in each case, along the further section (18b) of the cold head (3) in the direction of extension (ER) of the cold head (3), the cold head (3) has a continuous temperature gradient which spans a temperature difference $TD_{WKK}$ where

$$TD_{WKK} \geq (T_{ob} - T_{unt})/2,$$

and **in that**, in each case, along the further section (19b) of the adsorber bed (4) in the direction of extension (ER) of the cold head (3), the adsorber bed (4) has a continuous temperature gradient which spans a temperature difference $TD_{WAD}$ where

$$TD_{WAD} \geq (T_{ob} - T_{unt})/2.$$

6. Apparatus (100) according to any of claims 1 to 5, **characterized in that** the vacuum-insulated storage vessel (1) is designed with a neck tube (2), wherein the cold head (3) protrudes into the neck tube (2), and the adsorber bed (4) is arranged in the neck tube (2), and an inner wall (13) of the neck tube (2) delimits the gas space (12) laterally, and the gas space (12) is open downward into the vacuum-insulated storage vessel (1).

7. Apparatus (100) according to any of claims 1 to 5, **characterized in that** the apparatus (100) comprises a cold head container (20), wherein the cold head (3) protrudes into the cold head container (20) and the adsorber bed (4) is arranged in the cold head container (20), and wherein the cold head container (20) delimits the gas space (12) to the outside.

8. Apparatus (100) according to claim 7, **characterized in that** the cold head container (20) is designed to be vacuum-insulated.

9. Apparatus (100) according to claim 7 or 8, **characterized in that** the cold head container (20) protrudes into the vacuum-insulated storage vessel (1), in particular into a neck tube (2) of the vacuum-insulated storage vessel (1).

10. Apparatus (100) according to claim 9, **characterized in that** the cold head container (20) has an outflow capillary (21) for liquid helium, which outflow capillary leads through an underside vessel wall (22) of the cold head container (20) to the vacuum-insulated storage vessel (1) and opens into the gas space (12) at the inner base (23) of the cold head container (20), in particular wherein the outflow capillary (21) for liquid helium is designed with a closable valve (26).

11. Apparatus (100) according to one of claims 9 or 10, **characterized in that** the cold head container (20) has a recirculation capillary (25) for evaporated helium from the vacuum-insulated storage vessel (1), which recirculation capillary leads through an underside vessel wall (22) of the cold head container (20) and opens into the gas space (12) above an inner base (23) of the cold head container (20), in particular at the coldest cooling stage (10), in particular wherein the recirculation capillary (25) for evaporated helium is designed with a closable valve (27).

12. Apparatus (100) according to one of claims 9 or 10, **characterized in that** at least one passage (30) for evaporated helium from the vacuum-insulated storage vessel (1) is formed at an upper end (31) of the cold head container (20), which end is arranged close to the room-temperature end portion (5) of the cold head (3), in particular wherein an annular gap space (28) is provided within the vacuum-insulated storage vessel (1) between an inner wall (13) of the vacuum-insulated storage vessel (1) and an outer wall (29) of the cold head container (20), and the at least one passage (30) leads from an upper region (32) of the annular gap space (28) into an upper region (33) of the cold head container (20).

13. Apparatus (100) according to claim 12, **characterized in that** at least one flow line (34) is formed in the cold head container (20) and leads from the at least one passage (30) at the upper end (31) of the cold head container (20) along the cold head (3) to the coldest cooling stage (10) and opens into a lower region (35) of the gas space (12).

14. Apparatus (100) according to any of the preceding claims, **characterized in that**

a discharge connection (37) for impurities is formed on the room-temperature end portion (5) of the cold head (3), in particular wherein furthermore a flushing line (38) for a flushing gas leads from the room-temperature end portion (5) of the cold head (3) to the coldest cooling stage (10) and opens into a lower region (35) of the gas space (12), and in particular wherein the discharge connection (37) is connected to a discharge line (44) in which a suction pump (46) is arranged.

15. Helium recovery system (52), comprising an apparatus (100) for purifying and liquefying helium according to any of the preceding claims and at least one helium-cooled application device (53) and a balloon accumulator (54) for gaseous helium,

wherein a first supply line (58) for gaseous helium and a second supply line (59) for gaseous helium are connected to the feed connection (6) via a branch (57), wherein the first supply line (58) leads from the balloon accumulator (54) to the branch (57), in particular wherein the first supply line (58) further contains a compressor (55) and a pressure accumulator (56) for gaseous helium, and wherein the second supply line (59) leads from the at least one helium-cooled application device (53) to the branch (57) while bypassing the balloon accumulator (54).

16. Method for purifying and liquefying helium,

wherein a helium gas to be purified is passed through an adsorber bed (4) and thus purified, wherein the adsorber bed (4) is cooled with a cold head (3), wherein the cold head (3) comprises at least two cooling stages (8, 10), namely at least one warmest cooling stage (8), which is operated at a temperature $T_w$, and a coldest cooling stage (10), which is operated at a temperature $T_k$, where $T_w > T_k$, and wherein helium gas purified by the adsorber bed (4) is liquefied, and liquefied helium is collected in a vacuum-insulated storage vessel (1), wherein the helium gas to be purified is fed into a gas space (12) into which the cold head (3) protrudes with its cooling stages (8, 10) and which contains the adsorber bed (4), wherein the helium gas to be purified is guided through the gas space (12) from a room-temperature end portion (5) of the cold head (3), on which a feed connection (6) for the helium gas to be purified is formed, along the cold head (3) and via the adsorber bed (4) to the coldest cooling stage (10) of the cold head (3), the temperature $T_k$ of which is selected such that helium gas purified by the adsorber bed (4) is liquefied at the coldest cooling stage (10), and wherein a thermal coupling of the cold head (3) to the adsorber bed (4) is provided from at least two coupling-out locations (14) on the cold head (3) to at least two coupling-in locations (15) on the adsorber bed (4), **characterized in that** the thermal coupling of the cold head (3) to the adsorber bed (4) is designed such that a coupling-out temperature difference at the cold head (3) between a rearmost coupling-out location (14a) nearest to the room-temperature end of the cold head (3) and a foremost coupling-out location (14b) nearest to the coldest cooling stage (10) is at least 50 K, preferably at least 100 K, and a coupling-in temperature difference at the adsorber bed (4) between a rearmost coupling-in location (15a) nearest to the room-temperature end of the cold head (3) and a foremost coupling-in location (15b) nearest to the coldest cooling stage (10) is at least 50 K, preferably at least 100 K.

17. Method according to claim 16, **characterized in that**

the room-temperature end portion (5) and the cooling stages (8, 8a, 10, 10a) are arranged in succession along a direction of extension (ER) of the cold head (3), **in that** a continuous thermal coupling is provided between at least one section (18) of the cold head (3) and at least one section (19) of the adsorber bed (4) along the direction of extension (ER) of the cold head (3), such that along the section (18) of the cold head (3) in the direction of extension (ER) of the cold head (3), the cold head (3) has a continuous temperature gradient which spans a temperature difference $TD_{TKK}$, where $TD_{TKK} \geq 25K$, preferably $TD_{TKK} \geq 50K$, and, along the section (19) of the adsorber bed (4) in the direction of extension (ER) of the cold head (3), the adsorber bed (4) has a continuous temperature gradient which spans a temperature difference $TD_{TAD}$, where $TD_{TAD} \geq 25K$, preferably $TD_{TAD} \geq 50K$.

18. Use of an apparatus (100) according to any of claims 1 to 15 in a method according to one of claims 16 or 17.

**Revendications**

1. Dispositif (100) de purification et de liquéfaction de l'hélium, comprenant

   - une tête froide (3), avec

   une section d'extrémité arrière (5) à température ambiante, et au moins un étage de refroidissement arrière (8) le plus chaud en fonctionnement et un étage de refroidissement avant (10) le plus froid en fonctionnement,
   la section d'extrémité (5) à température ambiante et les étages de refroidissement (8, 10) étant agencés successivement le long d'une direction d'extension (ER) de la tête froide (3),

   - un lit d'adsorption (4) couplé thermiquement à la tête froide (3),
   - et un récipient de stockage (1) isolé sous vide et destiné à de l'hélium liquéfié, une chambre à gaz (12), dans laquelle pénètrent les étages de refroidissement (8, 10) de la tête froide (3) et qui contient le lit d'adsorption (4), étant créée grâce au dispositif (100),
   la chambre à gaz (12) menant de la section d'extrémité (5) à température ambiante de la tête froide (3), au niveau de laquelle est formé un raccord d'alimentation (6) destiné au gaz d'hélium à purifier, jusqu'à l'étage de refroidissement le plus froid (10) de la tête froide (3) en passant le long de la tête froide (3) et sur le lit d'adsorption (4), et un couplage thermique de la tête froide (3) par rapport au lit d'adsorption (4) étant créé à partir d'au moins deux points de sortie de couplage (14) situés au niveau de la tête froide (3) vers au moins deux points d'entrée de couplage (15) situés au niveau du lit d'adsorption (4),
   **caractérisé en ce que**
   une région de sortie de couplage (16), sur laquelle les points de sortie de couplage (14) sont répartis sur la tête froide (3), présente une longueur (LAK) d'au moins 5 cm dans la direction d'extension (ER) de la tête froide (3),
   une différence de température de sortie de couplage au niveau de la tête froide (3) étant d'au moins 50 K entre un point de sortie de couplage (14a) le plus en arrière et le plus proche de l'extrémité à température ambiante de la tête froide (3) et un point de sortie de couplage (14b) le plus en avant et le plus proche de l'étage de refroidissement le plus froid (10),
   et **en ce qu'**une région d'entrée de couplage (17), sur laquelle les points d'entrée de couplage (15) sont répartis sur le lit d'adsorption (4), présente une longueur (LEK) d'au moins 5 cm dans la direction d'extension (ER) de la tête froide (3), une différence de température d'entrée de couplage au niveau du lit d'adsorption (4) étant d'au moins 50 K entre un point d'entrée de couplage (15a) le plus en arrière et le plus proche de l'extrémité à température ambiante de la tête froide (3) et un point d'entrée de couplage (15b) le plus en avant et le plus proche de l'étage de refroidissement le plus froid (10),

2. Dispositif (100) selon la revendication 1, **caractérisé en ce que** la différence de température de sortie de couplage au niveau de la tête froide (3) est d'au moins 100 K entre le point de sortie de couplage (14a) le plus en arrière et le plus proche de l'extrémité à température ambiante de la tête froide (3) et le point de sortie de couplage (14b) le plus en avant et le plus proche de l'étage de refroidissement le plus froid (10),
   et **en ce qu'**une différence de température d'entrée de couplage au niveau du lit d'adsorption (3) est d'au moins 100 K entre le point d'entrée de couplage (15a) le plus en arrière et le plus proche de l'extrémité à température ambiante de la tête froide (3) et le point d'entrée de couplage (15b) le plus en avant et le plus proche de l'étage de refroidissement le plus froid (10).

3. Dispositif (100) selon l'une quelconque des revendications 1 ou 2, **caractérisé en ce qu'**un couplage thermique continu est créé entre au moins une sous-section (18) de la tête froide (3) et au moins une sous-section (19) du lit d'adsorption (4) le long de la direction d'extension (ER) de la tête froide (3), la sous-section (18) respective de la tête froide (3) s'étendant dans la direction d'extension (ER) de la tête froide (3) sur au moins une longueur de 5 cm, et la sous-section (19) respective du lit d'adsorption (4) s'étendant dans la direction d'extension (ER) de la tête froide (3) sur au moins une longueur de 5 cm.

4. Dispositif (100) selon la revendication 3, **caractérisé en ce qu'**une sous-section arrière (18a) de la tête froide (3) est créée entre la section d'extrémité (5) à température ambiante et l'étage de refroidissement le plus chaud (8), et une sous-section arrière (19a) du lit d'adsorption (4), couplée thermiquement en continu à ladite sous-section arrière (18a), est créée,

   l'étage de refroidissement le plus chaud (8) présentant une température $T_w$,
   **en ce que**, le long de la sous-section arrière (18a) de la tête froide (3) dans la direction d'extension (ER) de la tête froide (3), la tête froide (3) présente un gradient de température continu couvrant une différence de température $TD_{HKK}$ avec $TD_{HKK} \geq (293K - T_w)/2$,

et **en ce que**, le long de la sous-section arrière (19a) du lit d'adsorption (4) dans la direction d'extension (ER) de la tête froide (3), le lit d'adsorption (4) présente un gradient de température continu couvrant une différence de température $TD_{HAD}$ avec $TD_{HAD} \geq (293K - T_w)/2$.

5. Dispositif (100) selon la revendication 3 ou 4, **caractérisé en ce que**

au moins une autre sous-section (18b) de la tête froide (3) est créée entre un étage de refroidissement plus chaud (8a) et un étage de refroidissement plus froid (10a) de la tête froide (3), et au moins une autre sous-section (19b) du lit d'adsorption (4) couplée thermiquement en continu à ladite sous-section (18b) est créée, l'étage de refroidissement plus chaud (8a) présentant respectivement une température supérieure $T_{ob}$ et l'étage de refroidissement plus froid (10a) présentant respectivement une température inférieure $T_{unt}$, **en ce que**, respectivement le long de l'autre sous-section (18b) de la tête froide (3) dans la direction d'extension (ER) de la tête froide (3), la tête froide (3) présente un gradient de température continu couvrant une différence de température $TD_{WKK}$ avec

$$TD_{WKK}(T_{ob} - T_{unt})/2,$$

et **en ce que**, respectivement le long de l'autre sous-section (19b) du lit d'adsorption (4) dans la direction d'extension (ER) de la tête froide (3), le lit d'adsorption (4) présente un gradient de température continu couvrant une différence de température $TD_{WAD}$ avec

$$TD_{WAD}(T_{ob} - T_{unt})/2,$$

6. Dispositif (100) selon l'une quelconque des revendications 1 à 5, **caractérisé en ce que** le récipient de stockage (1) isolé sous vide est réalisé sous la forme d'un tube formant col (2), la tête froide (3) faisant saillie dans le tube formant col (2) et le lit d'adsorption (4) étant agencé dans le tube formant col (2), et une paroi intérieure (13) du tube formant col (2) délimitant latéralement la chambre à gaz (12), et la chambre à gaz (12) étant ouverte vers le bas dans le récipient de stockage (1) isolé sous vide.

7. Dispositif (100) selon l'une quelconque des revendications 1 à 5, **caractérisé en ce que** le dispositif (100) comprend un conteneur de tête froide (20), la tête froide (3) faisant saillie dans le conteneur de tête froide (20) et le lit d'adsorption (4) étant agencé dans le conteneur de tête froide (20), et le conteneur de tête froide (20) délimitant vers l'extérieur la chambre à gaz (12).

8. Dispositif (100) selon la revendication 7, **caractérisé en ce que** le conteneur de tête froide (20) est réalisé de manière à être isolé sous vide.

9. Dispositif (100) selon la revendication 7 ou 8, **caractérisé en ce que** le conteneur de tête froide (20) fait saillie dans le récipient de stockage (1) isolé sous vide, en particulier dans un tube formant col (2) du récipient de stockage (1) isolé sous vide.

10. Dispositif (100) selon la revendication 9, **caractérisé en ce que** le conteneur de tête froide (20) présente un capillaire d'évacuation (21) destiné à de l'hélium liquide, qui mène au récipient de stockage (1) isolé sous vide en passant à travers une paroi de récipient inférieure (22) du conteneur de tête froide (20) et débouche dans la chambre à gaz (12) au niveau du fond intérieur (23) du conteneur de tête froide (20), le capillaire d'évacuation (21) destiné à de l'hélium liquide étant en particulier muni d'une soupape (26) pouvant être fermée.

11. Dispositif (100) selon l'une quelconque des revendications 9 ou 10, **caractérisé en ce que** le conteneur de tête froide (20) présente un capillaire de recirculation (25), destiné à de l'hélium évaporé en provenance du récipient de stockage (1) isolé sous vide, qui traverse une paroi de récipient inférieure (22) du conteneur de tête froide (20) et débouche dans la chambre à gaz (12) au-dessus d'un fond intérieur (23) du conteneur de tête froide (20), en particulier au niveau de l'étage de refroidissement le plus froid (10), le capillaire de recirculation (25) destiné à de l'hélium évaporé étant en particulier muni d'une soupape (27) pouvant être fermée.

12. Dispositif (100) selon l'une quelconque des revendications 9 ou 10, **caractérisé en ce qu'**au moins un passage (30) destiné à de l'hélium évaporé en provenance du récipient de stockage (1) isolé sous vide est formé au niveau d'une extrémité supérieure (31) du conteneur de tête froide (20) qui est agencée à proximité de la section d'extrémité (5) à température ambiante de la tête froide (3), un espace interstitiel annulaire (28) étant en particulier aménagé à l'intérieur du récipient de stockage (1) isolé sous vide entre une paroi intérieure (13) du récipient de stockage (1) isolé sous vide et une paroi extérieure (29) du conteneur de tête froide (20), et le au moins un passage (30) menant d'une région supérieure (32) de l'espace interstitiel annulaire (28) jusqu'à une région supérieure (33) du conteneur de tête froide (20).

**13.** Dispositif (100) selon la revendication 12, **caractérisé en ce que** dans le conteneur de tête froide (20) est formée au moins une conduite d'écoulement (34) qui mène du au moins un passage (30) au niveau de l'extrémité supérieure (31) du conteneur de tête froide (20) jusqu'à l'étage de refroidissement le plus froid (10) en passant le long de la tête froide (3), et qui débouche dans une région inférieure (35) de la chambre à gaz (12).

**14.** Dispositif de mesure (100) selon l'une quelconque des revendications précédentes, **caractérisé en ce que** :

un raccord de vidange (37) destiné aux impuretés est formé au niveau de la section d'extrémité (5) à température ambiante de la tête froide (3), une conduite de rinçage (38) destiné à un gaz de rinçage menant en outre en particulier de la section d'extrémité (5) à température ambiante de la tête froide (3) jusqu'à l'étage de refroidissement le plus froid (10) et débouchant dans une région inférieure (35) de la chambre à gaz (12),

et le raccord de vidange (37) étant en particulier raccordé à une conduite de vidange (44) dans laquelle est agencée une pompe d'aspiration (46).

**15.** Système de récupération de l'hélium (52), comprenant un dispositif (100) de purification et de liquéfaction de l'hélium selon l'une quelconque des revendications précédentes, ainsi qu'au moins un appareil d'usage (53) refroidi à l'hélium et un ballon de stockage (54) destiné à de l'hélium gazeux,

une première conduite d'alimentation (58) destinée à de l'hélium gazeux et une deuxième conduite d'alimentation (59) destinée à de l'hélium gazeux étant raccordées au raccordement d'alimentation (6) par l'intermédiaire d'une ramification (57),

la première conduite d'alimentation (58) menant du ballon de stockage (54) jusqu'à la ramification (57), la première conduite d'alimentation (58) contenant en particulier en outre un compresseur (55) et un accumulateur de pression (56) pour de l'hélium gazeux,

et la deuxième conduite d'alimentation (59) menant du au moins un appareil d'usage (53) refroidi à l'hélium jusqu'à la ramification (57) en contournant le ballon de stockage (54).

**16.** Procédé de purification et de liquéfaction de l'hélium,

un gaz d'hélium à purifier étant dirigé sur un lit d'adsorption (4) et étant ainsi purifié, le lit d'adsorption (4) étant refroidi par une tête froide (3),

la tête froide (3) comprenant au moins deux étages de refroidissement (8, 10), à savoir au moins un étage de refroidissement le plus chaud (8) fonctionnant à une température $T_w$ et un étage de refroidissement le plus froid (10) fonctionnant à une température $T_k$, avec $T_w > T_k$,

et de l'hélium gazeux purifié grâce au lit d'adsorption (4) étant liquéfié et l'hélium liquéfié étant collecté dans un récipient de stockage (1) isolé sous vide,

le gaz d'hélium à purifier étant acheminé dans une chambre à gaz (12) dans laquelle pénètrent les étages de refroidissement (8, 10) de la tête froide (3) et qui contient le lit d'adsorption (4),

le gaz d'hélium à purifier étant guidé à travers la chambre à gaz (12), en passant le long de la tête froide (3) et sur le lit d'adsorption (4), depuis une section d'extrémité (5) à température ambiante, au niveau de laquelle est formé un raccord d'alimentation (6) destiné à du gaz d'hélium à purifier, de la tête froide (3) jusqu'à l'étage de refroidissement le plus froid (10) de la tête froide (3), dont la température $T_k$ est choisie de sorte que le gaz d'hélium purifié grâce au lit d'adsorption (4) est liquéfié au niveau de l'étage de refroidissement le plus froid (10),

et un couplage thermique de la tête froide (3) par rapport au lit d'adsorption (4) étant créé à partir d'au moins deux points de sortie de couplage (14) situés au niveau de la tête froide (3) vers au moins deux points d'entrée de couplage (15) situés au niveau du lit d'adsorption (4),

**caractérisé en ce que**

le couplage thermique de la tête froide (3) par rapport au lit d'adsorption (4) est conçu de telle manière que

une différence de température de sortie de couplage au niveau de la tête froide (3) est d'au moins 50 K, de manière préférée d'au moins 100 K, entre un point de sortie de couplage (14a) le plus en arrière et le plus proche de l'extrémité à température ambiante de la tête froide (3) et un point de sortie de couplage (14b) le plus en avant et le plus proche de l'étage de refroidissement le plus froid (10),

et une différence de température d'entrée de couplage au niveau du lit d'adsorption (3) est d'au moins 50 K, de manière préférée d'au moins 100 K, entre un point d'entrée de couplage (15a) le plus en arrière et le plus proche de l'extrémité à température ambiante de la tête froide (3) et un point d'entrée de couplage (15b) le plus en avant et le plus proche de l'étage de refroidissement le plus froid (10).

**17.** Procédé selon la revendication 16, **caractérisé en ce que**

la section d'extrémité (5) à température ambiante et les étages de refroidissement (8, 8a, 10, 10a) 10) sont agencés successivement le long d'une direction d'extension (ER) de la tête froide (3),

un couplage thermique continu est établi entre au moins une sous-section (18) de la tête froide (3) et au moins une sous-section (19) du lit d'adsorption (4) le long de la direction d'extension (ER) de la tête froide (3), de telle manière que,

le long de la sous-section (18) de la tête froide (3) dans la direction d'extension (ER) de la tête froide (3), la tête froide (3) présente un gradient de température continu qui couvre une différence de température $TD_{TKK}$, avec $TD_{TKK} \geq 25K$, de manière préférée $TD_{TKK} \geq 50K$,

et, le long de la sous-section (19) du lit d'adsorption (4) dans la direction d'extension (ER) de la tête froide (3), le lit d'adsorption (4) présente un gradient de température continu qui couvre une différence de température $TD_{TAD}$, avec $TD_{TAD} \geq 25K$, de manière préférée $TD_{TAD} \geq 50K$.

18. Utilisation d'un dispositif (100) selon l'une quelconque des revendications 1 à 15 dans un procédé selon l'une quelconque des revendications 16 ou 17.

ER

Fig. 1

100

$L_{AK}/L_{EK}$ 16/17

5
14/14a
4/4a/4a'
7
14
4/4a/4a''
3
9
4/4a/4a'''
6
2
13
15/15a
15
8
12
15/15b
14/14b
10
11
1b
1a
1

Fig. 2

EP 4 176 217 B1

Fig. 3

A-A

⊗ ER

2

12

4/4a

3/9

13

EP 4 176 217 B1

Fig. 4

Fig. 5

Fig. 6

EP 4 176 217 B1

Fig. 7

Fig. 8a

Fig. 8b

EP 4 176 217 B1

Fig. 9

EP 4 176 217 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 4570546 B
- WO 2016005463 A1
- EP 2567159 B1
- KR 102142312 B1
- CN 107677045 A
- JP H11118349 A

**In der Beschreibung aufgeführte Nicht-Patentliteratur**

- **A. CHOUDHURY** ; **S. SAHU**. Experimental helium liquefier with a GM cryocooler. *Review of Scientific Instrumenst*, 2017, vol. 88, 065116
- Helium gas purifier. Quantum Design GmbH
- Cryogenic Purificiation. Quantum Technology Corp
- KDHPS-CC Helium Purifier. CSIC Pride (Nanjing) Cryogenic Technology Co., Ltd
- Intermediate cooling from pulse tube and regenerator in a 4K pulse tube cryocooler. *Cryogenics*, vol. 48 (3), 154-159
- **WANG**. Intermediate cooling from pulse tube and regenerator in a 4K pulse tube cryocooler. *Cryogenics*, vol. 48 (3), 154-159